# EUROPÄISCHE PATENTSCHRIFT

(11) **EP 1 444 767 B1**
(45) Veröffentlichungstag und Bekanntmachung des Hinweises auf die Patenterteilung: **17.05.2006**
(21) Anmeldenummer: 02779191.2
(22) Anmeldetag: 30.10.2002
(51) Int. Cl.: H02K 49/10, F16F 15/03

(54) **VORRICHTUNG ZUR DÄMPFUNG VON DREHSCHWINGUNGEN**
DEVICE FOR DAMPING TORSIONAL VIBRATIONS
DISPOSITIF D'AMORTISSEMENT D'OSCILLATIONS DE TORSION

(30) Priorität: 15.11.2001 DE 10155986; 21.12.2001 DE 10163690; 26.02.2002 DE 10208301; 11.04.2002 DE 10216082
(43) Veröffentlichungstag der Anmeldung: 11.08.2004
(73) Patentinhaber: Karl Heinz Linnig GmbH & Co. KG, 88677 Markdorf (DE)
(72) Erfinder: LINNIG, Karl-Heinz, 88677 Markdorf (DE)
(74) Vertreter: Eisele, Otten, Roth & Dobler
(86) Internationale Anmeldenummer: PCT/DE2002/004045
(87) Internationale Veröffentlichungsnummer: WO 2003/047076

(56) Entgegenhaltungen:
- WO-A-96/39957
- DE-B- 1 087 275
- FR-A- 1 487 492
- US-A- 3 283 588
- US-A- 3 573 517
- DATABASE WPI Section PQ, Week 198941 Derwent Publications Ltd., London, GB; Class Q63, AN 1989-298908 XP002231355 -& SU 1 467 268 A (IKONNIKOV V I), 23. März 1989 (1989-03-23)

## Beschreibung

Die Erfindung betrifft insbesondere eine kupplungsfreie Einheit zur Drehmomentübertragung und Drehschwingungsdämpfung für Kraftfahrzeuge und vergleichbare Verkehrsmittel einschließlich Booten, deren Antrieb mit einem Verbrennungsmotor erfolgt und die zusätzlich von diesem angetriebene Hilfsaggregate aufweisen, wie z.B. Lüfter, Kompressor einer Klimaanlage, Lichtmaschine, Wasserpumpe, Hydraulikpumpe, Kompressor der Bremsanlage und ähnliche.

Die Erfindung betrifft weiterhin insbesondere eine Einheit zur berührungslosen Drehmomentübertragung und Drehschwingungsdämpfung für Kraftfahrzeuge und vergleichbare Verkehrsmittel einschließlich Booten, deren Antrieb mittels Verbrennungsmotor erfolgt und die zwischen dem Getriebe und dem Rad- bzw. Propellerantrieb, z.B. der Kardanwelle, angeordnet ist.

Mehr und mehr treten bei Verbrennungsmotoren, die den strengen EU-Anforderungen nach geringem Kraftstoffverbrauch und nach Abgasarmut und -reinheit gerecht werden müssen, ungleichförmige Betriebszustände auf. Diese resultieren beispielsweise aus niedrigen Leerlaufdrehzahlen. Die ungleichförmigen Betriebszustände können durch die allgemein bekannte, schwingungsdämpfende Übertragung von Drehmomenten mittels Keilriemen nicht mehr ausreichend gedämpft werden. Erschwerend kommt hinzu, dass die Anzahl erforderlicher Hilfsaggregate stark zugenommen hat und weiter zunehmen wird. Im Zusammenwirken mehrerer solcher Hilfsaggregate kann es, durch jedes einzelne angeregt, zu Überlagerungen von Drehschwingungen kommen. Eine Dämpfung durch einen oder mehrere parallele Keilriemen, der/die die Drehmomentübertragung von der Abtriebsriemenscheibe auf der Welle des Antriebes zu einer Antriebsriemenscheibe auf der Welle des Hilfsaggregates ermöglicht, reicht immer weniger aus. Zum einen muss der Keilriemen hohe Festigkeit haben, um die Drehmomente übertragen zu können und eine hohe Lebensdauer sicherstellen, zum anderen soll er elastisch im Sinne der Drehschwingungsdämpfung sein. Diese sich widersprechenden Anforderungen kann ein Keilriemen nur bedingt erfüllen.

Aus einem Katalog der Fa. CENTA ist unter der Marke Centaflex ein Bauteil bekannt, das aus zwei Gehäusehälften besteht. An sich gegenüberliegenden Flächen der Gehäuseteile sind zueinander korrespondierende Ausnehmungen angeordnet. In diese Ausnehmungen ist ein oder sind mehrere besonders geformte, elastische Kunststoffteile eingesetzt. Diese elastischen Kunststoffteile übernehmen zum einen die Drehmomentübertragung und sollen zum anderen, laut Herstellerangaben, auch eine genügende Drehschwingungsdämpfung erfüllen. Einer solchen Ausführung haftet der Nachteil an, dass deren elastische Kunststoffteile wegen der hohen Lastwechselzahl und der mit Schwingungen überlagerten, zu übertragenden Drehmomente im Laufe der Zeit zermürbt werden. Diese verlieren zunächst ihre anfängliche Elastizität und zerfallen schließlich. Der Verschleiß wird weiterhin durch eine thermische Belastung der zur Dämpfung dienenden Kunststoffteile beschleunigt, in der Nähe von Verbrennungsmotoren sind Temperaturen zwischen bis -40° C und bis +120° C nicht ungewöhnlich. Da zudem bei den Antriebs- und Hilfsaggregaten unterschiedliche Frequenzen und Amplituden auftreten können, die zu übertragen und zu dämpfen sind, müssen die elastischen Kunststoffteile in unterschiedlichen Härtegraden zur Verfügung gestellt werden, was zu einer großen Typenvielfalt führt. Der Austausch verschlissener Kunststoffteile führt zu einem hohen und kostenintensiven Wartungsaufwand.

Weiterhin ist aus der SU 1 467 268 A eine Vorrichtung zur Übertragung von Drehmomenten und zur Dämpfung von Drehschwingungen bekannt, welche ein durch den Verbrennungsmotor angetriebenes Bauteil und ein ein nachgeordnetes Aggregat antreibendes Bauteil umfasst, wobei gegenüberliegende Flanschflächen der Bauteile gemeinsam mit den Bauteilen gegeneinander verschiebbare Magnete aufweisen, durch welche zwischen den Bauteilen Drehmomente übertragbar und Drehschwingungen dämpfbar sind und wobei eine Verdrehbarkeit der beiden Bauteile durch eine mechanische Mitnahme-Verbindung begrenzt ist.

Mit der Erfindung soll die Aufgabe gelöst werden, mit einfachen, preiswert herstellbaren Mitteln und einfacher konstruktiver Ausführung berührungslos Drehmomente von Verbrennungsmotoren im lastlosen Bereich oder im Teillastbereich oder auch im Volllastbereich auf Hilfsaggregate zu übertragen und auftretende Drehschwingungen wirksam, verschleißfrei, Überlagerungen verhindernd und wartungsarm zu dämpfen. Dabei soll diese Einheit nicht die Kupplungsfunktion einer Reib- oder Magnetkupplung, die intervallartig betätigt werden muss, ersetzen.

Diese Aufgabe wird ausgehend von den Merkmalen des Oberbegriffs des Anspruchs 1 durch die kennzeichnenden Merkmale des Anspruchs 1 gelöst. Durch die in den Unteransprüchen genannten Merkmale sind vorteilhafte Ausführungen und Weiterbildungen der Erfindung möglich.

Die erfindungsgemäße Vorrichtung zur Dämpfung von Drehschwingungen sieht zwei begrenzt gegeneinander verdrehbare, eine gemeinsame geometrische Drehachse aufweisende Bauteile vor, welche an gegenüberliegenden Flächen Magnete aufweisen, die gemeinsam mit dem jeweiligen Bauteil gegeneinander verdrehbar sind- Durch die begrenzte Verdrehbarkeit der Bauteile gegeneinander weisen diese zueinander ein Spiel bzw. einen begrenzten Freilauf auf, in dem zwischen diesen kein mechanischer Kontakt in eine Drehrichtung oder eine Gegendrehrichtung besteht. In diesem Toleranzbereich bestimmen allein die zwischen den Magneten wirkenden Kräfte das Verhalten der Bauteile in Bezug auf eine Drehung um die gemeinsame geometrische Drehachse. Hierdurch ist zwischen den Bauteilen eine verschleißfreie, berührungslose Kopplung erreicht, welche durch die bei einem Verdrehen der Bauteile provozierten Rückstellkräfte der zusammenwirkenden Magnete, schwingungsdämpfende Eigenschaften hat. Diese schwingungsdämpfenden Eigenschaften stehen nicht nur in einem Leerlauf, das heißt bei fehlender Rotation, sondern auch im Antriebsfall zur Verfügung, solange die zwischen den Magneten wirkenden Kräfte zur Übertragung des zugeführten Drehmoments ausreichen. Hierdurch ist ein mechanischer Kontakt der Bauteile in eine Drehrichtung auch im Lastbetrieb vollständig vermieden und somit eine optimale Entkopplung von Antrieb und Abtrieb erreicht.

Eine vorteilhafte Ausführung des Erfindungsgegenstandes sieht vor, die Bauteile mit scheibenförmigen Flanschflächen für die Anordnung der Magnete auszustatten, welche insbesondere parallel zueinander ausgerichtet sind. Hierdurch steht viel Bauraum für die Anordnung von zusammenwirkenden Magneten zur Verfügung, wobei insbesondere ein von der Drehachse weit entfernter ringförmiger Bereich für die Anordnung der Magnete vorgesehen ist, da diese in diesem Bereich durch den großen wirksamen Hebel eine optimale Wirkung haben.

Weiterhin ist es vorgesehen, zwischen gegenüberliegenden bzw. zusammenwirkenden Magneten einen Spalt vorzusehen, der es erlaubt zur Beeinflussung der zwischen den Magneten wirksamen Magnetkräfte beispielsweise Scheiben einzuschieben, welche die Feldlinien insbesondere schwächen oder ablenken. Bei eingeschobener Scheibe weist die Vorrichtung dann beispielsweise eine geringe Dämpfung auf, die unter Umständen bei der Übertragung von kleinen Momenten gewünscht ist.

Erfindungsgemäß ist es insbesondere vorgesehen mittels der Einzelmagnete (16, 17, 95, 101) Leerlauf- und/oder Teillastdrehmomente zu übertragen. Hierdurch reicht in Bezug auf ein mögliches Spitzendrehmoment eine relativ kleine Dimensionierung der Vorrichtung aus, ohne dass die Vorrichtung zur Übertragung des Spitzendrehmoments ungeeignet wäre. Die Übertragung des Volllastdrehmoments bzw. des Spitzendrehmoments erfolgt dann über mechanische, in Drehrichtung wirkende Anschläge unter Verzicht auf eine Schwingungsdämpfung. Alternativ ist es vorgesehen, durch eine Polsterung bzw. Ummantelung der zusammenwirkenden Teile auch bei voller Belastung der Vorrichtung eine Schwingungsdämpfung zu gewährleisten. Bei entsprechender Auslegung der Vorrichtung ist selbstverständlich auch die schwingungsgedämpfte Übertragung von Spitzendrehmomenten möglich. Bei einer derartigen Vorrichtung sind die erfindungsgemäß vorgesehenen mechanische Anschläge bzw. Mitnehmer nicht zwingend erforderlich.

Weiterhin ist es vorteilhaft das Spiel zwischen den beiden Bauteile durch mechanische Anschläge zu begrenzen, die insbesondere als in Ausnehmungen eingreifende Mitnehmer ausgebildet sind. Hierdurch ist eine kompakte Bauform erzielt, wobei sich derartige mechanische Anschläge optimal zwischen für die Anordnung der Magnete vorgesehene parallele Scheiben integrieren lassen.

Es ist vorteilhaft, die Magnete in senkrecht zu der Drehachse der Vorrichtung stehenden Ebenen anzuordnen. Dies ermöglicht eine einfache Fertigung der die Magnete aufnehmenden Bauteile als Scheiben, welche konzentrisch zur Drehachse angeordnete Bohrungen zur Aufnahme von Magneten mit kreisförmigem Querschnitt aufweisen.

Weiterhin ist es vorgesehen, die Magnete in Ebenen anzuordnen, in welchen die Drehachse der Vorrichtung liegt. Hierdurch sind Bauformen möglich, bei denen die Wirkung von mit gleichen Polen gegenüberliegenden, sich abstoßenden Magneten Anwendung findet.

Ein Ausführungsbeispiel der Erfindung sieht vor, zur Erzielung einer neutralen Mittelstellung sich anziehende, vollflächig gegenüberstehende Magnetpaare auf den Bauteilen anzuordnen. Dies hat den Vorteil, dass sich anziehende Magnete durch gegenseitiges Verschieben bzw. Verdrehen um eine entfernt von den Magneten liegende Drehachse besonders schwer zu trennen sind und somit die vorhandenen Magnetkräfte optimal genutzt werden.

Die Ausnutzung der abstoßenden Wirkung sich gleichpolig gegenüberliegender Magnete ist optimal durch eine Vorrichtung möglich, bei der die an einer ersten Scheibe befestigten Magnete den an einer zweiten Scheibe befestigten Magneten gleichpolig gegenüber stehen.

Weiterhin sieht ein Ausführungsbeispiel der Erfindung vor, den begrenzten Freilauf der Mitnahmeverbindung, welche die Verdrehbarkeit der beiden Bauteile bestimmt, so zu bemessen, dass das Magnetpaar bzw. die Dämpfungseinheit bzw. die Dämpfungszelle in einer maximalen Auslenkstellung eine Rückstellkraft, insbesondere eine maximale Rückstellkraft, in Richtung der Mittelstellung bewirkt. Hierdurch ist eine Vorrichtung verwirklicht, welche auf stärkere Belastungen,mit stärkeren Rückstellkräften reagiert.

Erfindungsgemäß kann vorgesehen sein, die Vorrichtung in einem Winkelgetriebe anzuordnen oder einem Winkelgetriebe vorzuschalten oder nachzuschalten. Hierdurch ist es möglich, insbesondere auch Geräusche zu unterdrücken, welche durch aneinanderschlagende Zahnflanken entstehen. Die Vorrichtung dämpft die Schläge ab, welche das Zahnrad von mit diesem in Eingriff stehenden Zahnrädern erhält. Weiterhin ist das der Vorrichtung direkt zugeordnete Zahnrad auch gegen die von einer mit der Vorrichtung in Verbindung stehenden Welle entkoppelt.

Besonders vorteilhaft ist der Einsatz eines mit der Vorrichtung kombinierten Winkelgetriebes zwischen einem Verbrennungsmotor und einem Lüfterrad, da die Vorrichtung auf vom Verbrennungsmotor und auf vom Lüfterrad ausgehende ungleichmäßige Betriebszustände dämpfend einwirkt.

Weitere Einzelheiten der Erfindung werden in der Zeichnung anhand von schematisch dargestellten Ausführungsbeispielen beschrieben. Hierbei zeigt:
- Figur 1a: eine Schnittansicht einer erfindungsgemäßen Vorrichtung,
- Figur 1b: eine Schnittansicht einer weiteren erfindungsgemäßen Vorrichtung,
- Figur 2: eine schematisch dargestellte Draufsicht auf die Flanschfläche 13 der in Figur 1a dargestellten Vorrichtung,
- Figur 3: eine schematisch dargestellte Draufsicht auf die Flanschfläche 12 der in Figur 1a dargestellten Vorrichtung,
- Figur 4: eine Schnittansicht einer dritten erfindungsgemäßen Vorrichtung,
- Figur 5a: eine Schnittansicht einer vierten erfindungsgemäßen Vorrichtung,
- Figur 5b: eine Seitenansicht einer fünften erfindungsgemäßen Vorrichtung,
- Figur 6: eine Schnittansicht einer vierten erfindungsgemäßen Vorrichtung,
- Figur 7: eine exemplarische Darstellung für die Anordnung von Dauermagneten,
- Figur 8: eine Detailansicht aus Figur 6,
- Figur 9-11: ein Ausführungsbeispiel , welches das Verständnis der Erfindung erleichtert,
- Figur 12: eine schematische Darstellung eines in einem Fahrzeug angeordneten Winkelgetriebes und
- Figur 13: eine Schnittdarstellung eines weiteren Winkelgetriebes.

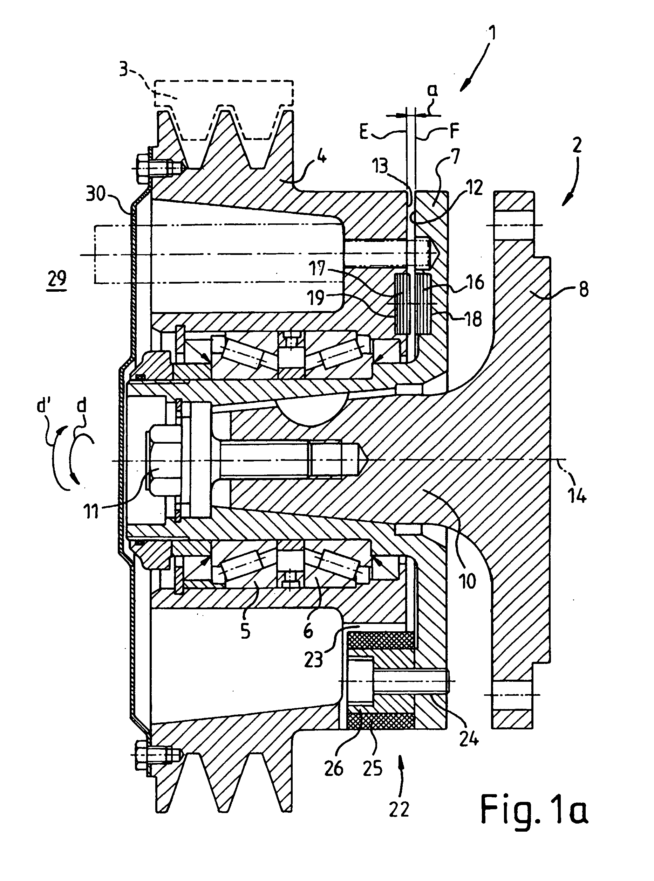

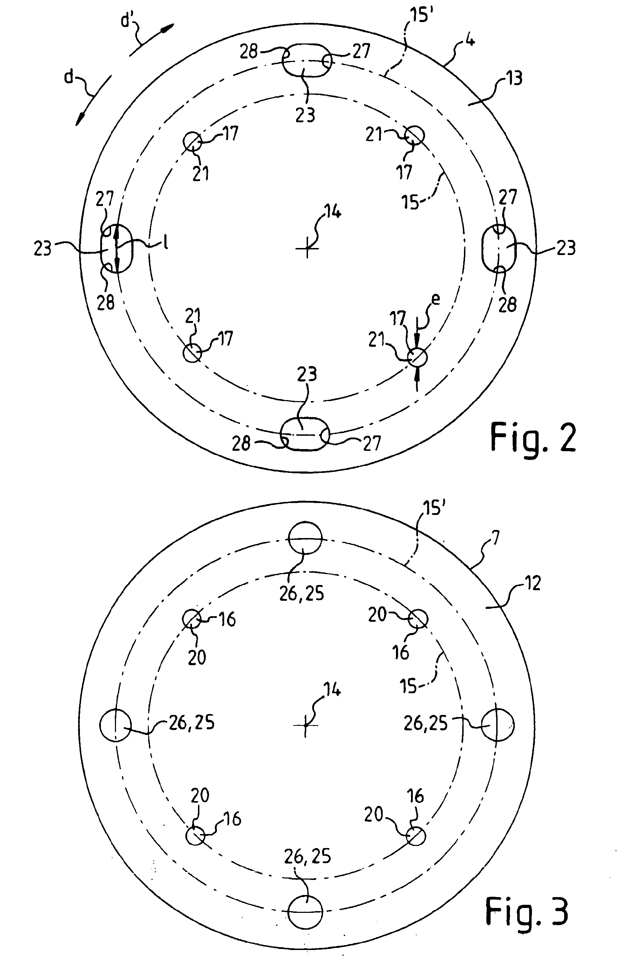

In Figur 1a ist eine erste Ausführungsform einer erfindungsgemäßen Vorrichtung 1 dargestellt. Die Vorrichtung 1 ist dafür vorgesehen, zwischen einer nicht dargestellten Antriebsmaschine, wie zum Beispiel einem Verbrennungsmotor, und einem von der Antriebsmaschine anzutreibenden Hilfsaggregat 2, wie zum Beispiel einem Kompressor für eine Klimaanlage oder einer zusätzlichen Lichtmaschine, eingesetzt zu werden. Im vorliegenden Ausführungsbeispiel erfolgt der Antrieb der Vorrichtung 1 über einen Riemen 3 auf eine Riemenscheibe 4 der Vorrichtung 1. Die Vorrichtung 1 besteht im Wesentlichen aus der Riemenscheibe 4 und einer in dieser über Walzenlager 5, 6 drehbar gelagerten Gegenscheibe 7. Die Gegenscheibe 7 nimmt drehfest einen Flansch 8 auf, welcher zum Hilfsaggregat 2 gehört und mit einer nicht dargestellten Antriebswelle 9 des Hilfsaggregats 2 verschraubt ist. Die drehfeste Verbindung zwischen der Gegenscheibe 7 und dem Flansch 8 erfolgt durch einen am Flansch 8 ausgebildeten Spannkonus 10, der mittels einer Spannschraube 11 gegen die Gegenscheibe 7 verspannt ist. Die Gegenscheibe 7 und die Riemenscheibe 4 stehen sich mit Flanschflächen 12, 13 gegenüber. Die Flanschflächen 12, 13 sind etwa senkrecht zu einer Drehachse 14 der Vorrichtung 1 bzw. des Flansches 8 ausgerichtet. Weiterhin weisen die Flanschflächen 12, 13 einen Abstand a zueinander auf. Auf konzentrisch zur Drehachse 14 verlaufenden Kreisbahnen 15 sind in regelmäßigen Abständen kreisringförmige Dauermagnete 16, 17 an den Flanschflächen 12, 13 angeordnet (siehe hierzu auch die schematischen, idealisierten Figuren 2 und 3). Diese sitzen in kreisringförmigen Vertiefungen 18, 19 der Flanschflächen 12, 13. Hierbei sind die Flanschfläche 12, 13 so mit Dauermagneten 16, 17 bestückt, dass sich jeweils gegenseitig anziehende Dauermagnet 16, 17 gegenüberliegen. Dies bedeutet, einem auf der Flanschfläche 12 der Gegenscheibe 7 angeordnetem Dauermagnet 16, welcher mit einem Südpol 20 zur Flanschfläche 13 weist, liegt ein auf der Flanschfläche 13 angeordneter Dauermagnet 17 gegenüber, welcher mit einem Nordpol 21 zur Flanschfläche 12 bzw. zum Dauermagnet 16 weist. Durch diese Anordnung der Dauermagnete 16, 17 auf den Flanschflächen 12, 13 ziehen sich die Riemenscheibe 4 und die Gegenscheibe 7 gegenseitig an. Hierdurch erfolgt bei einer Drehung der Riemenscheibe 4 in Pfeilrichtung d um die Drehachse 14 eine Mitnahme der Gegenscheibe 7 in die Pfeilrichtung d, wobei der Mitnahmeeffekt allein durch die zwischen den Dauermagneten 16, 17 wirkenden Magnetkräfte bewirkt ist. Die Dauermagnete 16, 17 liegen in Ebenen E, F, welche parallel zueinander verlaufen und von der Drehachse 14 senkrecht geschnitten werden. Im Ausführungsbeispiel können die Dauermagnete 16, 17 etwa 50% bis 85% des maximal auftretenden Drehmoments übertragen. Bei einer Überschreitung dieses Grenzmoments kommen Mitnahme-Verbindungen 22 zwischen den Scheiben 4, 7 zum Einsatz, um ein Vorbeirutschen der Riemenscheibe 4 an der Gegenscheibe 7 zu vermeiden. Die Mitnahme-Verbindungen 22 sind auf weiteren konzentrisch zur Drehachse 14 verlaufenden Kreisbahnen 15' der Flanschflächen 12, 13 angeordnet, wobei die Kreisbahn 15' außerhalb der Kreisbahnen 15 liegt, auf welcher die Dauermagnete 16, 17 angeordnet sind. Auf der Riemenscheibe 4 sind ellipsenähnliche Nuten 23 bzw. entlang einem Kreisbogen verlaufende Nuten ausgebildet, welche punktsymmetrisch zur Drehachse 14 angeordnet sind und sich zur Flanschfläche 13 hin öffnen. In die Gegenscheibe 7 sind gegenüber den Nuten Gewindelöcher 24 angeordnet, in welche jeweils ein mit einem elastischen Kunststoffring 25 ummantelter aus einer Schraube und einer Hülse bestehender Bolzen 26 eingeschraubt ist. Jede Mitnahme-Verbindung 22 ist somit durch einen Bolzen 26 mit elastischem Kunststoffring 25, der mit einer Nut 23 zusammenwirkt, gebildet. Der Bolzen 26 besteht im Ausführungsbeispiel aus einer Schraube und einer von dieser gehaltenen Hülse. Durch die begrenzte Länge 1 der Nuten 23 ist ein Durchrutschen der Riemenscheibe 4 gegen die Gegenscheibe 7 verhindert, wobei die Nuten 23 bzw. die Bolzen 26 mit den elastischen Kunststoffringen 25 so bemessen sind, dass ein verdrehen der Riemenscheiben 4 gegen die Gegenscheibe 7 sowohl in die Pfeilrichtung d als auch in die entgegengesetzte Pfeilrichtung d' möglich ist. Bei einer Überschreitung des oben erwähnten Grenzdrehmoments erfolgt eine Mitnahme der Gegenscheibe 7 durch ein Zusammenwirken von Bolzen 26 und Nuten 23, wobei die Nuten 23 dann abhängig von der Drehrichtung mit einer Endfläche 27, 28 an den elastischen Kunststoffringen 25 der Bolzen 26 anliegen. Somit werden Vibrationen oder eine wechselnde Antriebsgeschwindigkeit durch das zwischen den Scheiben 4, 7 bzw. zwischen den Endflächen 27, 28 der Nuten 23 und dem elastischen Kunststoffring 25 des Bolzens 26 in die Drehrichtungen d, d' vorhandene Spiel aufgefangen bzw. nicht direkt bzw. nur gedämpft auf das Hilfsaggregat 2 übertragen. Diese Dämpfung erfolgt unterstützt durch die zwischen den Magneten 16, 17 wirkenden Magnetkräfte und ist verschleißarm. Die Vorrichtung 1 ist zu einer von dem Hilfsaggregat wegweisenden Seite 29 durch einen Deckel 30 verkleidet. Die Länge 1 der Nuten 23 ist im Verhältnis zu einem Durchmesser der Bolzen 26 so ausgelegt, dass das in die Drehrichtungen d, d' vorhandene Spiel kleiner ist als ein halber Durchmesser e der in Draufsicht kreisförmigen Dauermagnete 16, 17.

Weitere allgemeine Anmerkungen zu Figur 1a: Die Drehmomentübertragung geschieht mittels eines Riemenantriebes zwischen einer Ausgangswelle des Verbrennungsmotors und der Welle eines ersten Hilfsaggregates, wobei zwischen eine angetriebene Riemenscheibe 4 und die Welle des Hilfsaggregates 2 ein berührungslos drehendes, Dauermagnete tragendes Bauteil 7 eingesetzt ist. Dieses Dauermagnete 16 tragende Bauteil 7 kann zusätzlich mit Übertragungsbolzen 26 versehen sein, die dann die Übertragungsfunktion übernehmen, wenn das zu übertragende Drehmoment die Magnetkräfte übersteigt. Die Riemenscheibe 4 weist einen zum Hilfsaggregat 2 gerichteten ersten Flansch 4, 13 auf. Dieser ist in kreisringartiger Anordnung mit einer Vielzahl von Dauermagneten 17 besetzt. Die Dauermagnete 17 sind paarweise in wechselnder Nord- und Südpolanordnung und in solcher Größe und/oder Anzahl angebracht, dass sie zwischen 50% und 85% des maximal zu übertragenden Drehmomentes übertragen können. Der erste Flansch 4, 13 weist koaxiale, kreisförmig gewölbte Ringnuten 23 auf, die vorzugsweise außerhalb der Dauermagnete 17 eingebracht sind. Die Riemenscheibe 4 weist eine innere Bohrung zur Aufnahme wenigstens eines Lagers 5, 6 auf. Dieses ist durch eine Anschlagfläche und einen Sicherungsring gegen axiale Verschiebung gesichert. Die Lager 5, 6 nehmen in ihrem Innendurchmesser eine sich längserstreckende Nabe eines zweiten Flansches 7, 12 auf. Dieser zweite Flansch 7, 12 liegt parallel zum ersten, aber in axialem Abstand zu diesem. Der zweite Flansch 7, 12 trägt auf seiner dem ersten Flansch 4, 13 zugewandten Fläche 12 in gleicher kreisringartiger Anordnung, Größe und Anzahl und auf dem gleichen Mitteldurchmesser wie der erste Flansch 4, 13 ebenfalls Dauermagnete 16. Dabei liegen sich die beiden Flanschflächen 12, 13 so gegenüber, dass stets ein Nordpol einem Südpol gegenüberliegt. Der zweite Flansch 7, 12 trägt auf einem zum Mitteldurchmesser der koaxialen, kreisförmig gewölbten Ringnuten 23 des ersten Flansches 4, 13 korrespondierenden Durchmessers Stehbolzen 26. Die Stehbolzen 26 greifen in die koaxialen, kreisförmig gewölbten Ringnuten 23 des ersten Flansches 4, 13 derart ein, dass sie, solange das Drehmoment über die Dauermagnete 16, 17 übertragen werden kann, etwa in der Mitte des Kreissegmentes der Ringnuten 23 liegen. Erst wenn das zu übertragende Drehmoment die Magnetkräfte übersteigt, verdrehen sich die beiden Flansche 7, 12 bzw. 4, 13 so gegeneinander, dass die Stehbolzen 26 an einem Seitenende 27, 28 der Ringnuten 23 zum Anliegen kommen und nun die Drehmomentübertragung solange übernehmen, bis das zu übertragende Drehmoment wieder auf wenigstens die Haltekräfte der Dauermagneten 16, 17 abgefallen ist. Die Nabe des zweiten Flansches 7, 12 ist auf dem freien Wellenende 8 des nicht vollständig gezeigten Hilfsaggregates 2 drehfest und axial gesichert befestigt. Die Übertragung des Drehmomentes ist damit sichergestellt. Die jeweils erforderliche Leistung und damit das zu übertragende Drehmoment, des Hilfsaggregates 2 wird durch eine gesonderte Steuereinrichtung eingestellt.

Nach einer der Zeichnung nicht entnehmbaren Variante ist der Luftspalt a zwischen den sich gegenüberliegenden Reihen der Dauermagnete vorzugsweise mechanisch und vor Einbau der Einheit einstellbar. Da die Magnetkräfte in der Nulllage sich gegenüberliegender Nord- und Südpole relativ gering sind, können auftretende Drehschwingungen geräuschlos und wirksam dadurch gedämpft werden, dass die beiden Flansche gegeneinander um einen Wert um die Nulllage des Magnetfeldes herum geringfügig pendeln. Die Übertragung des Drehmomentes ist sichergestellt, da bei stärkerer Abweichung aus der Nulllage, wenn die Magnetfeldlinien stärker verzerrt werden, sich deren Magnetkraft progressiv steigend verändert.

Von weiterem Vorteil ist es, den Abstand der beiden Flanschflächen verstellbar zu gestalten. Jetzt lassen sich bei gleicher Baugröße der die Dauermagnete tragenden Einheit die zu übertragenden Drehmomente und/oder die Größe des Dämpfungseffektes der Drehschwingungen auf unterschiedliche Anforderungen verschiedener Kraftfahrzeuge anpassen. Eine hohe Typenvielfalt wird dadurch vermieden.

Ebenfalls von Vorteil ist es, die im zweiten Flansch befestigten Stehbolzen mit einem elastischen Mantel zu versehen. Dieser übernimmt dann auch bei hohen Drehmomenten eine gewisse Drehschwingungsdämpfung gegenüber den sonst "metallisch" anliegenden, nichtdämpfenden Stehbolzen.

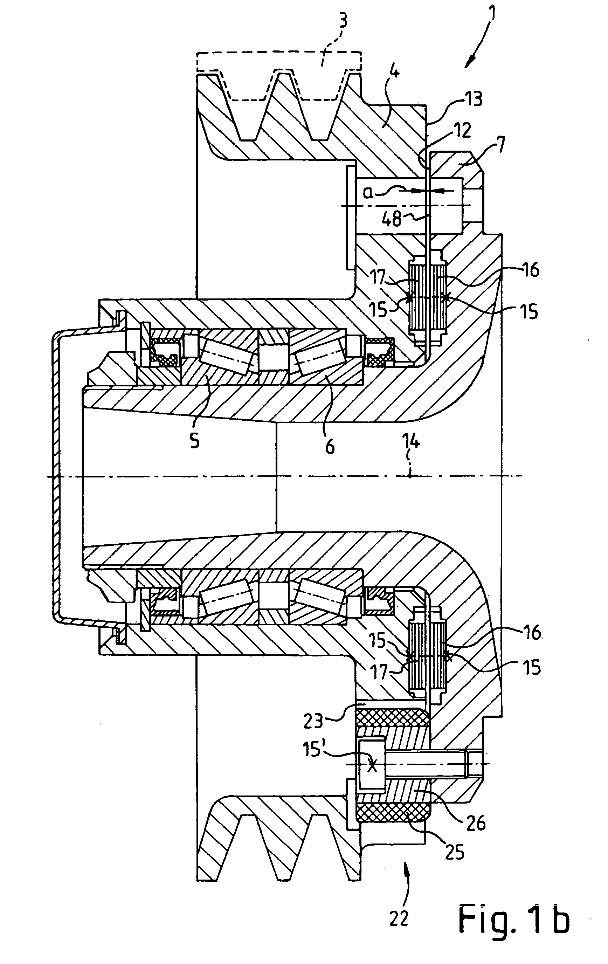

Figur 1b zeigt eine zweite Ausführungsvariante einer erfindungsgemäßen Vorrichtung 1. Die Vorrichtung 1 besteht im Wesentlichen aus einer durch einen Riemen 3 angetriebenen Riemenscheibe 4, welche über Wälzlager 5, 6 auf einer im Querschnitt T-förmigen Gegenscheibe 7 gelagert ist. Die Gegenscheibe 7 ist zur Ankopplung eines nicht dargestellten Hilfsaggregats ausgebildet. Die Scheiben 4, 7 liegen sich mit Flanschflächen 13, 12, gegenüber. Auf den Flanschflächen 12, 13 sind auf konzentrisch zu einer Drehachse 14 der vorrichtung 1 verlaufenden Kreisbahnen 15 Dauermagnete 17, 16 angeordnet. Die Dauermagnete 17, 16 liegen sich getrennt durch einen Spalt 48 der Breite a gegenüber. Durch die zwischen den Dauermagneten 17, 16 wirkenden Magnetkräfte erfolgt bei einer Drehung der Riemenscheibe 4 eine schleppende Mitnahme der Gegenscheibe 7. Bei Auftreten von Drehmomenten, welche allein durch die Dauermagnete 16, 17 nicht mehr von der Riemenscheibe 4 auf die Gegenscheibe 7 übertragbar sind, kommen Mitnahme-Verbindungen 22 zum Einsatz. Die Mitnahme-Verbindungen 22 sind auf einer weiteren konzentrisch zur Drehachse 14 verlaufenden Kreisbahn 15' angeordnet, welche einen größeren Durchmesser als die Kreisbahn 15 aufweist. Im Wesentlichen bestehen die Mitnahme-Verbindungen 22, von denen in dem in Figur 1b dargestellten Schnitt nur eine sichtbar ist, aus entlang der Kreisbahn 15' verlaufenden Nuten 23 und einem Bolzen 26, welcher mit einem elastischen Kunststoffring 25 ummantelt ist. Im extremen Belastungsfall wird dann die Gegenscheibe 7 über die mit dieser verbundenen Bolzen 26 von der Riemenscheibe 4 mitgeschleppt. Hinsichtlich der prinzipiellen Anordnung der Dauermagnete 16, 17 bzw. der Nuten 23 und der Bolzen 26 wird auf die Darstellungen in den Figuren 2 und 3 verwiesen.

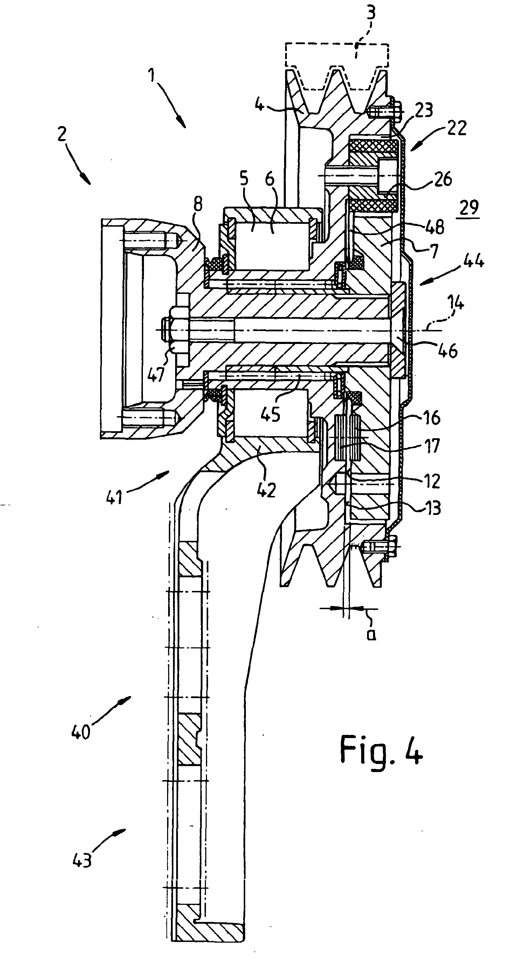

Figur 4 zeigt eine dritte Ausführungsvariante einer erfindungsgemäßen Vorrichtung 1. Die in Figur 4 dargestellte Vorrichtung 1 ist im Gegensatz zu der in Figur 1 dargestellten Vorrichtung nicht an einem Hilfsaggregat 2 aufgehängt, sondern gemeinsam mit diesem an einem Träger 40 gelagert, welcher an einem Ende 41 als ringförmige Nabe 42 ausgebildet ist und an einem zweiten Ende 43 zur Befestigung an einem nicht dargestellten Fahrzeigrahmen oder Motorblock vorgesehen ist. In der Nabe 42 ist eine Riemenscheibe 4 mittels Kugellagern 5, 6 gelagert, welche von einem nicht dargestellten Motor über einen Riemen 3 antreibbar ist. Konzentrisch zu einer Drehachse 14 der Vorrichtung 1 weist die Riemenscheibe 4 eine Bohrung 44 auf in welcher ein zu dem Hilfsaggregat 2 gehörender Flansch 8 über ein weiteres Lager 45 frei drehbar geführt ist. Somit sind in der Nabe 42 des Trägers 40 die Riemenscheibe 4 und der Flansch 8 frei drehbar gegeneinander und frei drehbar gegenüber der Nabe 42 gelagert. Auf einer dem Hilfsaggregat 2 gegenüber liegenden Seite 29 der Vorrichtung 1 ist der Flansch 8 mit einer Gegenscheibe 7 drehfest verbunden. Die Verbindung der Gegenscheibe 7 mit dem Flansch 8 ist durch eine Spannschraube 46 realisiert, welche mit einer Kontermutter 47 zusammenwirkt und die Gegenscheibe 7 auf den Flansch 8 zieht. Durch diese drehfeste Verbindung zwischen dem Flansch 8 und der Gegenscheibe 7 ist die Gegenscheibe 7 mit den selben Freiheiten gegenüber der Nabe 42 und der Riemenscheibe 4 ausgestattet, wobei diese Freiheit durch zwischen der Riemenscheibe 4 und der Gegenscheibe 7 wirkende Mitnahme-Verbindungen 22 begrenzt ist. Analog zu der in Figur 1 beschriebenen Vorrichtung tragen die Gegenscheibe 7 und die Riemenscheibe 4 an gegenüberliegenden Flanschflächen 12, 13 Dauermagnete 16, 17, welche sich paarweise gegenüber liegen. Die Flanschflächen 12, 13 weisen einen Abstand a zueinander auf und schließen zwischen sich einen Luftspalt 48 ein. Die paarweise gegenüberliegende Dauermagnete 16, 17 liegen sich mit unterschiedlichen Polungen gegenüber und ziehen sich gegenseitig an. Einem Verschieben der Dauermagnete 16, 17 gegeneinander, das heißt einem Verdrehen der Riemenscheibe 4 gegen die Gegenscheibe 7 wirken die Magnetkräfte entgegen, welche bestrebt sind die Magnete 16, 17 genau in einer aufeinander ausgerichteten Position zu halten. Um beim Auftreten von Spitzendrehmomenten ein Durchrutschen der Riemenscheibe 4 gegenüber der Gegenscheibe 7 zu vermeiden bzw. um auch hohe Drehmomente dauerhaft übertragen zu können, kommen als Mitnahme-Verbindungen 22 wieder Nuten 23 zum Einsatz, welche mit Bolzen 26 zusammenwirken (siehe auch Beschreibung zu Figur 1a). Die Mitnahme-Verbindungen 22 und die Dauermagnete 16, 17 sind auf nicht dargestellten, konzentrisch zu der Drehachse 14 verlaufenden Kreisen an den Flanschflächen 12, 13 angeordnet. Hierbei sind die Mitnahme-Verbindungen 22 und die Dauermagnete nicht in deckungsgleichen Positionen angeordnet, damit sich diese nicht gegenseitig behindern. Im Unterschied zu Figur 1a sind bei der in Figur 4 beschriebenen Vorrichtung 1 die Bolzen 26 an der Riemenscheibe 4 und die Nuten 23 an der Gegenscheibe 7 angeordnet.

Gemäß einer nicht dargestellten Ausführungsvariante ist es vorgesehen, die Magnete in deckungsgleichen Positionen mit den Mitnahme-Verbindungen vorzusehen, um den zur Verfügung stehenden Bauraum voll auszunutzen. Bei einer derartigen Vorrichtung sind die Dauermagnete dann auf dem Nutgrund der Nuten und auf dem Kopf der Bolzen angeordnet. Das heißt, die Nuten dürfen in diesem Fall nicht als Durchbrechungen, sondern nur als Vertiefungen ausgeführt sein.

Weitere allgemeine Anmerkungen zu Figur 4: Die Verwendung eines an einem Karosserieteil befestigbaren Trägers 40 erlaubt es, die gesamte Einheit 1 in diesem drehbar gelagert aufzunehmen. Vorzugsweise geht ein Trägerschenkel in eine Nabe 42 über. Durch diese Nabe 42 erstreckt sich zum einen das freie Wellenende 8 des nicht näher dargestellten Hilfsaggregates 2 und zum anderen eine Nabe der Riemenscheibe 4. Dabei ist die Nabe der Riemenscheibe 4 über wenigstens ein Lager 5, 6 drehbar auf dem freien Wellenende 8 des Hilfsaggregates 2 gelagert. Die Riemenscheibe 4 und das freie Wellenende 8 sind in der Nabe 42 des Trägers 40 gegen Axialverschiebung gesichert, das freie Wellenende 8 durch eine axiale Schraubverbindung 46, 47, die Riemenscheibe 4 mittels einer Anlagefläche und einem Sicherungsring. In bereits beschriebener Weise trägt die vom Hilfsaggregat 2 abgewandte Fläche 13 der Riemenscheibe 4 auf einem Kreisring Dauermagnete 17 mit wechselnder Polarität. Mit der axialen Schraubverbindung 46, 47 des freien Wellenendes 8 des Hilfsaggregates 2 wird gleichzeitig ein Flansch 7 gegen die Fläche 13 der Riemenscheibe 4, mit,Abstand a zu dieser, verspannt. Dieser Flansch 7 trägt ebenfalls in kreisringförmiger Anordnung im Wechsel gegenpolige Dauermagnete 16. Diese liegen sich mit denen der Riemenscheibe 4 gegenpolig gegenüber. Die Riemenscheibe 4, 13 oder der Flansch 7, 12 können vorzugsweise in einem außerhalb der Dauermagnete 16, 17 liegenden Kreis Stehbolzen 26 tragen. Das jeweilige Gegenstück weist koaxial angeordnete, kreisförmig gewölbte Ringnuten 23 auf, in welche die Stehbolzen 26 eingreifen.

Eine weitere vorteilhafte Ausgestaltung ergibt sich, wenn zwischen dem Innendurchmesser der Nabe des Trägers und dem Außendurchmesser der Nabe der Riemenscheibe ein großer radialer Spalt bestimmter axialer Tiefe vorgesehen wird. In diesen Spalt kann eine die Hilfseinrichtung steuernde Einrichtung, z.B. eine Kupplung, eingesetzt werden.

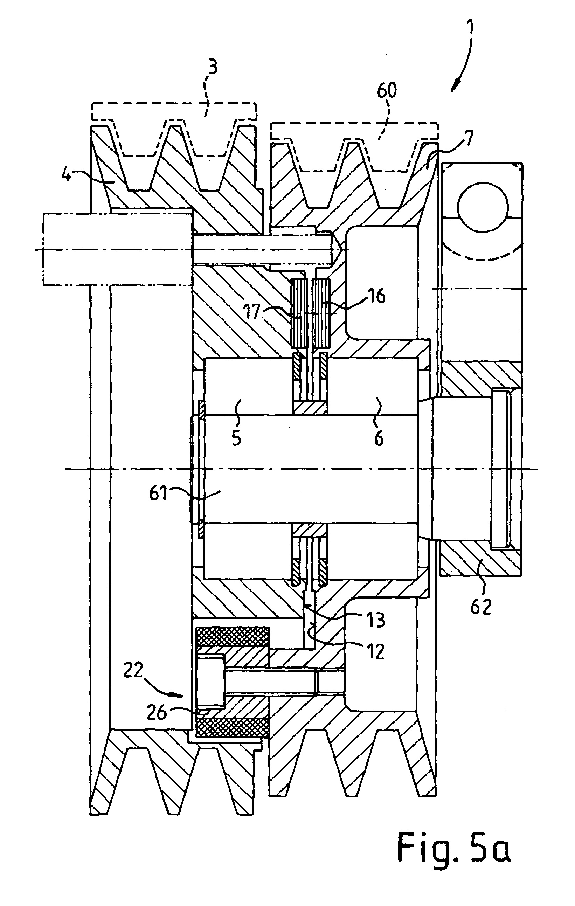

Figur 5a zeigt eine vierte Ausführungsvariante einer erfindungsgemäßen Vorrichtung 1. Die Vorrichtung 1 besteht aus einer durch einen Riemen 3 angetriebenen Riemenscheibe 4 und einer abtreibenden Riemenscheibe 7. Die abtreibende Riemenscheibe 7 treibt ein nicht dargestelltes Hilfsaggregat über einen zweiten Riemen 60 an. Die Scheiben 7, 4 sind über Kugellager 5, 6 auf einem Achsstummel 61 drehbar gelagert, welcher beispielsweise an einem Motorblock oder einem Fahrzeugrahmen über einen Flansch 62 befestigt ist. Zwischen den Scheiben 7, 4 sind in aus den Figuren 1 bis 4 bekannter Weise Dauermagnete 16, 17 und Mitnehmer-Verbindungen 22 an Flanschflächen 12, 13 angeordnet.

Weitere allgemeine Anmerkungen zu Figur 5a: Bei der konstruktiven Ausführung der Vorrichtung 1 nach Figur 5a sind zwei Riemenscheiben 4, 7 drehbar auf einer gemeinsamen Achse 61 gelagert. Eine der beiden Riemenscheiben 4, 7 ist die vom Verbrennungsmotor angetriebene, die andere eine das Hilfsaggregat über einen Riementrieb treibende. Die treibende Riemenscheibe 4 kann außerdem zusätzlich direkt mit der Welle eines weiteren Hilfsaggregates verbunden sein. Die Achse 61, auf der die beiden Riemenscheiben 4, 7 gelagert sind, kann in einem Träger gelagert sein. An diesem, am Verbrennungsmotor oder einem Karosserieteil befestigten Träger, werden beide Riemenscheiben 4, 7 und gegebenenfalls ein Hilfsaggregat getragen, während ein zweites Hilfsaggregat, nicht dargestellt, an einem anderen Bauteil befestigt ist. Die beiden sich gegenüberliegenden Flächen 12, 13 der beiden Riemenscheiben 4, 7 tragen in bereits beschriebener Weise Dauermagnete 16, 17. Mittels deren Magnetkraft erfolgen die Drehmomentübertragung von der angetriebenen zur treibenden Riemenscheibe mit eventuell zusätzlichem Hilfsaggregat und die Drehschwingungsdämpfung. Auch bei dieser Ausführung können die Magnetkräfte so bemessen sein, dass lediglich ein Teildrehmoment übertragen wird und das volle Drehmoment über Stehbolzen 26, wie bereits beschrieben, übertragen wird.

In Kombination der Lösungsgedanken nach Figur 1 und Figur 5a ist es auch möglich, den Flansch nach Figur 1 an seinem Außendurchmesser als Riemenscheibe auszubilden. Dadurch entsteht, bei anderem konstruktivem Aufbau, eine nach Figur 5a analoge Lösung.

Sinngemäß ist auch eine Kombination der Lösungsgedanken nach Figur 4 und Figur 5a möglich, wenn der Flansch nach Figur 4 an seinem Außendurchmesser so ausgebildet wird, dass er an seiner freien äußeren Stirnseite nach außen verlängert wird, dort in einen größeren Durchmesser übergeht und als Riemenscheibe ausgebildet ist.

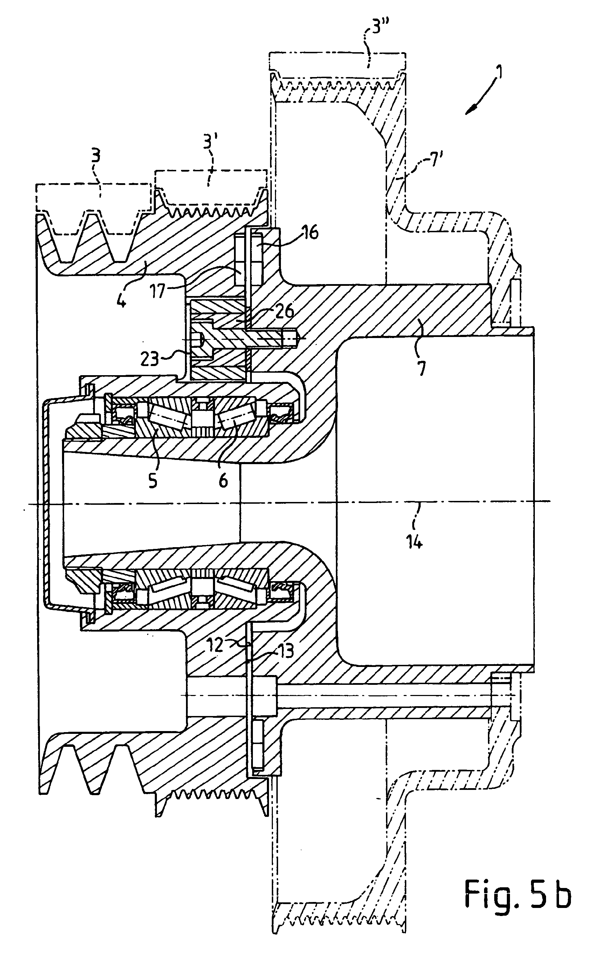

In Figur 5b ist eine fünfte Ausführungsvariante einer erfindungsgemäßen Vorrichtung 1 dargestellt. Diese besteht wiederum im Wesentlichen aus einer Riemenscheibe 4, welche über Wälzlager 5, 6 auf einem Fortsatz einer Scheibe 7 gelagert ist. Die Scheiben 4, 7 liegen sich mit Flanschflächen 12, 13 gegenüber. Auf diesen Flanschflächen 12, 13 sind paarweise gegenüberliegende Dauermagnete 16, 17 angeordnet. Weiterhin bestehen zwischen den Scheiben 4, 7 Mitnehmerverbindungen 22, welche durch nutförmige Ausnehmungen 23 in der Scheibe 4 und mit der Scheibe 7 in Verbindung stehende Bolzen 26 gebildet sind. Die Scheibe 4 ist für die Ankopplung von zwei Riemen 3, 3' vorgesehen. Der Scheibe 7 ist drehfest eine Riemenscheibe 7' zugeordnet, über welche ein weiterer Riemen 3'' ankoppelbar ist. Weiterhin ist an der Scheibe 7 ein konusförmiger Flansch eines nicht dargestellten Antriebs- oder Hilfsaggregats ankoppelbar. Die in Figur 5b dargestellte Vorrichtung 1 kann in verschiedenster Weise eingesetzt werden. Es ist beispielsweise vorgesehen, die Scheibe 7 an ein nicht dargestelltes Antriebsaggregat anzukoppeln und dessen Drehung schwingungsgedämpft auf die Scheibe 4 zu übertragen und über die Riemen 3, 3' an Hilfsaggregate weiterzuleiten. Zusätzlich besteht bei einem derartigen Betrieb die Möglichkeit, über den Riemen 3'' direkt Antriebsenergie vom Antriebsaggregat weiterzuleiten. Weiterhin ist es beispielsweise vorgesehen, die Scheibe 7 an einem nicht dargestellten Hilfsaggregat anzuflanschen. Der Antrieb erfolgt dann beispielsweise über den Riemen 3, wobei die vom Riemen 3 zugeführte Antriebsenergie dem Hilfsaggregat durch die Zwischenschaltung der Scheiben 4, 7 schwingungsgedämpft zugeführt wird. Über den weiterhin auf der Scheibe 4 laufenden Riemen 3' ist beispielsweise ein weiteres Hilfsaggregat angetrieben, das unempfindlich gegenüber Schwingungen ist. Die schwingungsgedämpfte Drehenergie kann vom Riemen 3'' beispielsweise auf ein drittes Hilfsaggregat übertragen werden. Schließlich ist beispielsweise auch ein Betrieb der Vorrichtung 1 vorgesehen, bei welchem die Scheibe 7 drehbar auf einer nicht dargestellten Achse gelagert ist und beispielsweise ein Antrieb der Scheibe 7 über den Riemen 3'' erfolgt. Zwischen der mit der Riemenscheibe 7' drehfest verbundenen Scheibe 7 und der Scheibe 4 erfolgt dann eine Schwingungsdämpfung, so dass die vom Riemen 3'' eingeleitete Drehenergie schwingungsgedämpft von den Riemen 3 bzw. 3' weiterleitbar ist.

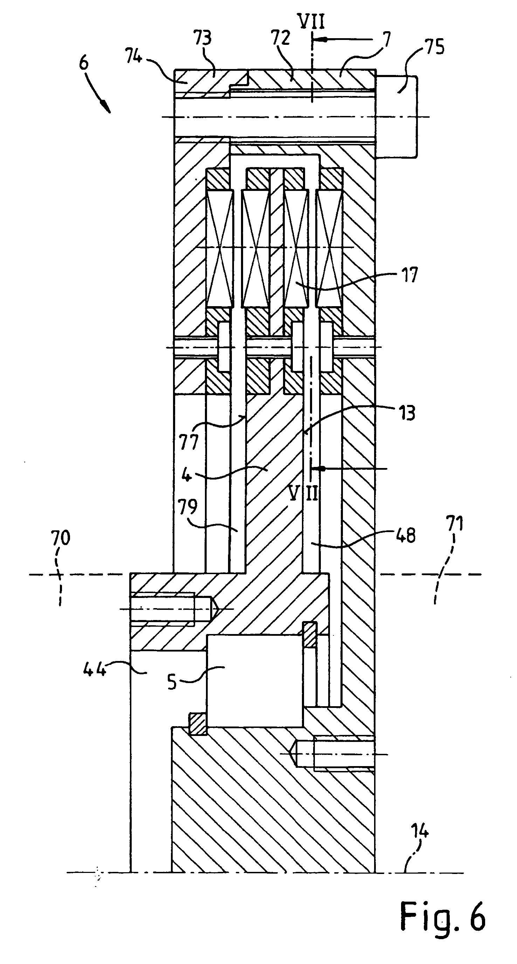

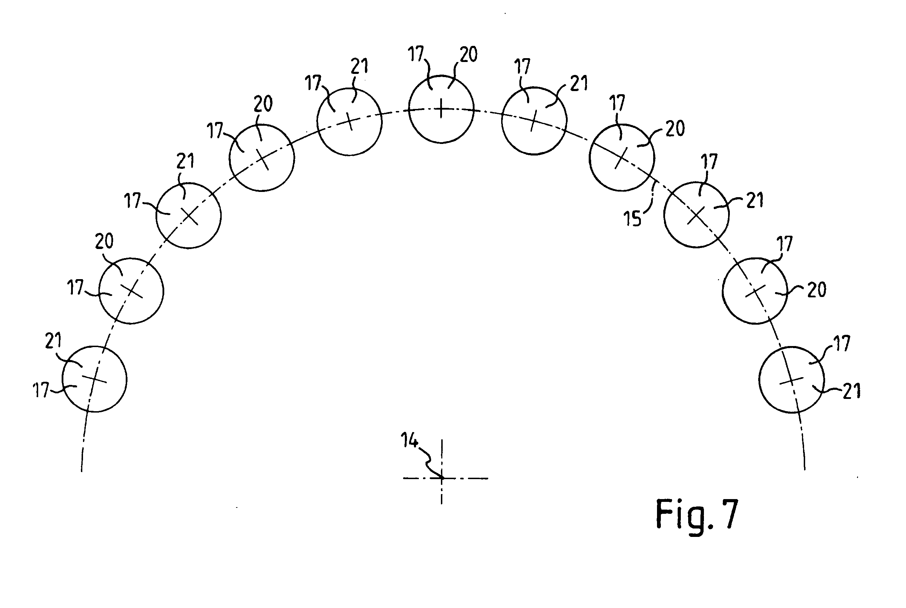

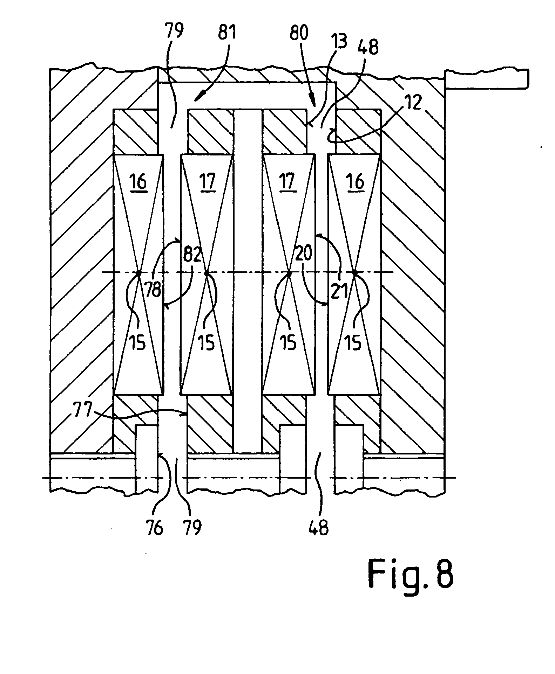

In Figur 6 ist eine weitere Ausführungsvariante einer erfindungsgemäßen Anordnung 1 dargestellt. Diese ist insbesondere für die Drehmomentübertragung und Drehschwingungsdämpfung bei hohen Drehmomenten vorgesehen. Eine solche Lösung ist beispielsweise für Kraftfahrzeuge, Boote und Flugzeuge geeignet, bei denen die Anordnung zwischen einem Motorausgang und einem Getriebeeingang oder zwischen einem Getriebeausgang und einem Rad- oder Propellerantrieb zum Einsatz kommen. Gerade bei solchen Drehverbindungen ist es erforderlich, das maximale Drehmoment übertragen zu können, wenn die Drehschwingungsdämpfung aktiv ist, da, wie bekannt, hier das maximale Drehmoment im Teillastbereich des Verbrennungsmotors übertragen werden muss. Die in Figur 6 dargestellte konstruktive Ausführung sieht vor, an einer Motorausgangswelle 70 bzw. der Getriebeausgangswelle 70 (mit gestrichelten Linien angedeutet) eine Scheibe 4 anzuflanschen. In einer zu einer Drehachse 14 der Anordnung 1 zentrischen Bohrung 44 in der Scheibe 4 ist eine weitere zweiteilige Scheibe 7 über ein Lager 5 gelagert. Die Scheibe 7 ist an eine Eingangswelle 71 (mit gestrichelten Linien angedeutet) eines nicht näher dargestellten Getriebes angeflanscht. Die zweiteilige Scheibe 7 besteht im Wesentlichen aus zwei C-förmigen Teilscheiben 72, 73, welche in einem kreisförmigen Randbereich 74 mittels am Umfang gleichmäßig verteilten Schrauben 75 aneinander befestigt sind. Hierbei wird die ringförmig ausgebildete Teilscheibe 73 von der Teilscheibe 72 getragen, das heißt eine Lagerung der Scheibe 7 erfolgt nur im Bereich der Teilscheibe 72. Die Scheibe 4 weist zwei gegenüberliegende Flanschflächen 13, 77 auf, auf welchen auf Kreisbahnen 15 in regelmäßigen Abständen Dauermagnete 17 angeordnet sind (siehe Figur 7 und 8). Ein Ausschnitt einer vereinfachten, idealisierten Schnittansicht VII-VII auf die Flanschfläche 13 der Scheibe 4 und auf auf dieser konzentrisch zur Drehachse 14 angeordnete Magnete 17 ist in Figur 7 dargestellt. Die Dauermagnete 17 weisen in abwechselnder Reihenfolge mit Nordpolen 21 und Südpolen 20 aus der Zeichenebene. Durch Luftspalte 48, 79 beabstandet (siehe Detail aus Figur 6 in Figur 8) liegen den Dauermagneten 17 Dauermagnete 16 gegenüber, welche auf Flanschflächen 12, 76 der Scheibe 7 bzw. der Teilschieben 72, 73 angeordnet sind. Somit bilden die auf den gegenüberliegenden Flanschflächen 12, 13 bzw. 76, 77 angeordneten Dauermagnete 16, 17 Dämpfungseinheiten 80, 81, welche sich gegenseitig in ihrer Wirkung unterstützen bzw. addieren. Die Dauermagnete 16, 17 auf den Scheiben 4, 7 liegen sich jeweils gegenpolig gegenüber, das heißt einem Nordpol 21 eines der Dauermagneten 17 liegt ein Südpol 20 eines der Dauermagneten 16 gegenüber und einem Südpol 78 eines der Dauermagneten 17 liegt ein Nordpol 82 eines der Dauermagneten 16 gegenüber. Die gegenüberliegenden Dauermagnete sind immer durch Luftspalte 48, 79 getrennt.
Erfindungsgemäß sind in einem nicht dargestellten Bereich der Anordnung 1 zwischen den Scheiben 4, 7 Spiel aufweisende Mitnehmer angeordnet, welche z.B. bei einer Überschreitung des durch die Dämpfungseinheiten 80, 81 übertragenen maximalen Drehmoments eine formschlüssigen Mitnahme der Scheiben 7 mit der abtreibenden Scheibe 4 bewirken. Eine besondere Ausführungsvariante sieht beispielsweise vor, 98 % des maximalen Drehmoments mittels der Magnete zu übertragen.

Weitere allgemeine Anmerkungen zu den Figuren 6 bis 8: In einer weiteren Ausgestaltung der in Figur 6 dargestellten Lösung können mehrere ineinander gelagerte, mit Dauermagneten besetzte Flansche bzw. Scheiben vorgesehen sein. Bei gleichen Flanschdurchmessern bzw. Scheibendurchmessern lassen sich damit deutlich höhere Drehmomente bzw. lassen sich gleiche Drehmomente bei geringerem, platzsparenderem Baudurchmesser übertragen. Wird nämlich die den Flansch zur Motorausgangswelle bildende Nabe verlängert, dann kann auf dieser ein zum Flansch paralleler, in Figur 6 nicht dargestellter, weiterer Flansch so befestigt werden, dass dieser zum einen den Einbau des Flansches ermöglicht, aber gleichzeitig den Anbau eines, ebenfalls nicht gezeigten, Flansches im axialen Abstand zum Flansch 6 erlaubt. Werden nun auf den sich gegenüberliegenden Flanschflächen der beiden Flansche ebenfalls Dauermagnete aufgebracht, dann ergibt sich die Erhöhung der Drehmomentübertragung, ohne dass die Drehschwingungsdämpfung beschränkt oder mindestens nicht spürbar beschränkt wird.

In einer Kombination der konstruktiven Lösung nach Figur 6 und nach Figur 1a ergibt sich die weitere Gestaltungsmöglichkeit, den Außendurchmesser des Gehäuses oder des Flansches als Riemenscheibe auszubilden. Damit wird die Möglichkeit geschaffen, neben der vorbeschriebenen direkten Drehmomentübertragung und Drehschwingungsdämpfung eine zusätzliche Übertragung und Dämpfung für ein Hilfsaggregat zu schaffen.

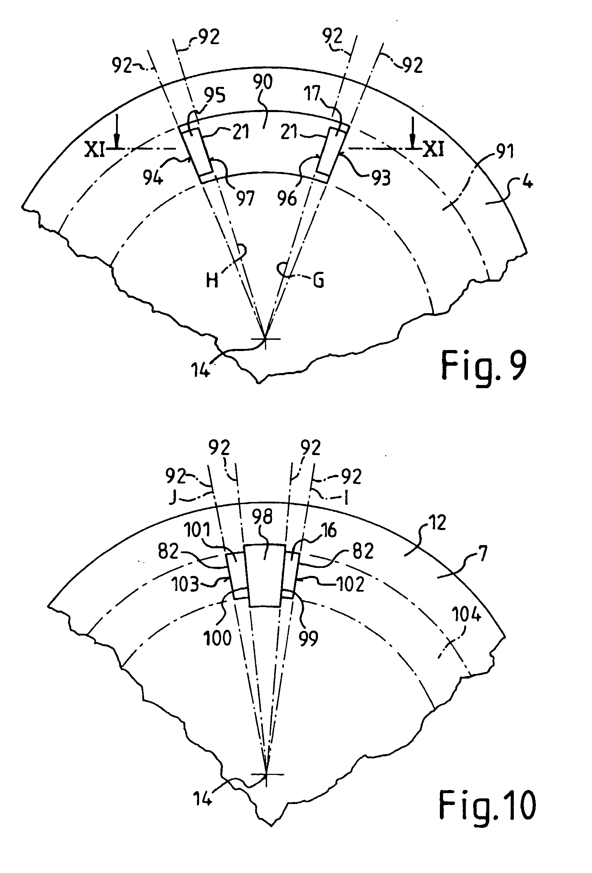

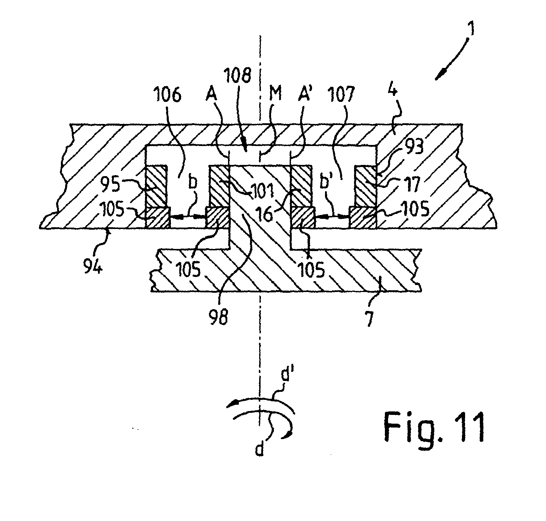

In den Figuren 9 bis 11 ist eine weitere, nicht erfindungsgemäße Ausführungsvariante der Vorrichtung 1 dargestellt. In der Figur 9 ist schematisch eine Riemenscheibe 4 der in Figur 11 im Schnitt gezeigten vorrichtung 1 in Seitenansicht dargestellt. Die Riemenscheibe 4 weist eine beispielhaft dargestellte konzentrisch zu einer Drehachse 14 gekrümmte Durchbrechung 90 auf, welche weitgehend durch einen Abschnitt eines konzentrisch zur Drehachse 14 liegenden Kreisrings 91 (gestrichelt angedeutet) definiert ist. An in Richtung von Radialen 92 (gestrichelt dargestellt) verlaufenden Seitenflächen 93, 94 der Durchbrechung 90 sind Dauermagnete 17, 95 angeordnet, welche mit Nordpolen 21 aufeinander ausgerichtet sind. Wirkflächen 96, 97 der Dauermagnete 17, 95 sind ebenfalls parallel zu Radialen 92 (gestrichelt dargestellt) ausgerichtet. Die Dauermagnete 17, 95 liegen somit in Ebenen G, H, in welchen die Drehachse 14 bzw. die jeweilige Radiale 92 verläuft. In der Riemenscheibe 4 sind weitere nicht dargestellte Durchbrechungen vorgesehen, welche auf dem Kreisring in regelmäßigen Anständen liegen.

Figur 10 zeigt eine Scheibe 7, welche an eine Welle eines nicht dargestellten Hilfsaggregates angeflanscht ist und ebenfalls um die Drehachse 14 drehbar ist. Die Scheibe 7 ist ebenfalls schematisch dargestellt und weist in beispielhafter Darstellung eine Nase 98 auf, welche über eine Flanschfläche 12 der Scheibe 7 hervorsteht. Die Nase 98 trägt an parallel zu Radialen 92 (gestrichelt dargestellt) ausgerichteten Seitenflächen 99, 100 Dauermagnete 16, 101. Die Dauermagnete 16, 101 besitzen ebenfalls parallel zu Radialen 92 ausgerichtete Wirkflächen 102, 103. Zu diesen sind die Dauermagnete 16, 101 mit Nordpolen 82 orientiert. Die Dauermagnete 16, 101 liegen somit in Ebenen I, J, in welchen die Drehachse 14 bzw. die jeweilige Radiale 92 verläuft. Im zusammengesetzten Zustand der Anordnung 1 bzw. der Scheiben 4, 7 greift die Nase 98 der Scheibe 7 in die Durchbrechung 90 der Scheibe 4 ein. Dann stehen sich die Dauermagnet 16, 17 bzw. 101, 95 gegenüber. In dieser Einbausituation sind die kreisscheibenförmigen Dauermagnete 16, 17, 95, 101 als Scheiben in einem Torus 104 (gestrichelt angedeutet) orientiert. Auf der Scheibe 7 ist eine der Anzahl und der Lage der auf der Riemenscheibe 4 angeordneten Durchbrechungen 90 entsprechende Anordnung von Nasen 98 vorgesehen.

Figur 11 zeigt einen vereinfacht dargestellten Schnitt, welcher im Wesentlichen einem in Figur 9 angedeuteten Schnitt XI-XI bei zusammengesetzten Scheiben 4, 7 entspricht. Die Nase 98 steht in einer Mittelstellung M zwischen den Seitenflächen 93, 94 bzw. zwischen den Dauermagneten 17, 95. In dieser Mittelstellung M wird die Nase 98 durch die sich gegenseitig abstoßenden Magnetpaare 16, 17 bzw. 95, 101 gehalten. Bei der Übertragung eines Drehmoments von der Riemenscheibe 4 auf die Scheibe 7 verlässt die Nase 98 die Mittelstellung M beispielsweise in eine Antriebsstellung A oder A' (je nach Antriebsrichtung), in welcher die Magnetpaare 16, 17 bzw. 95, 101 einander angenähert sind bzw. einen größeren Abstand zueinander aufweisen. Dies bewirkt eine verstärktes gegenseitiges Abstoßen zwischen den sich annähernden Magneten. Ein Aufeinanderschlagen der Magnetpaare 16, 17 bzw. 95,101 ist durch nur in der Figur 11 dargestellte Anschläge 105 verhindert. Bei einem hohen Drehmoment ist somit ein Anliegen der Nase 98 der Scheibe 7 an der Scheibe 4 unter Zwischenschaltung zweier gegenüberliegender Anschläge 105 möglich. In diesem Fall erfolgt die Momentübertragung direkt. Für die Dämpfung von Leerlaufschwingungen oder der Antriebsdrehung überlagerten Schwingungen, welche das maximal durch die Magnetkräfte übertragbare Drehmoment nicht überschreiten, stehen somit in beide Drehrichtungen d, d' Spielräume 106, 107 einer gleichen Breite b bzw. b' zur Verfügung. Durch den Einbau von Magnetpaaren unterschiedlicher Stärke in eine Dämpfungszelle 108 ist es möglich, in die beiden Drehrichtungen d, d' unterschiedliche Dämpfungswirkungen zu erzielen. Somit ist das mit alleiniger Wirkung der Magnete übertragbare maximale Drehmoment abhängig von der Drehrichtung vorgegeben.

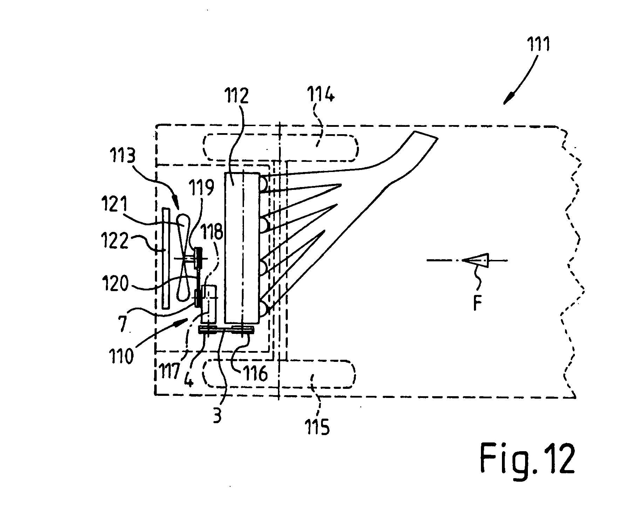

Figur 12 zeigt schematisch die Anordnung eines Winkelgetriebes 110 in einem Fahrzeug 111. Das Winkelgetriebe 110 ist zwischen einem Verbrennungsmotor 112 und einem Lüfter 113 angeordnet ist. Der Verbrennungsmotor 112 ist zwischen Vorderrädern 114, 115 des Fahrzeugs 111 quer zu einer Fahrtrichtung F eingebaut. Über eine mit einer Kurbelwelle des Verbrennungsmotors 112 in Verbindung stehende Riemenscheibe 116 erfolgt mittels eines Riemens 3 der Antrieb einer ersten Riemenscheibe 4 des Winkelgetriebes 110. Die Riemenscheibe 4 ist schwingungsgedämpft auf einer ersten Welle 117 des Winkelgetriebes 110 gelagert. Die erste Welle 117 treibt eine zweite Welle 118, mit welcher eine Riemenscheibe 7 drehfest verbunden ist. Die Riemenscheibe 7 steht mit einer Riemenscheibe 119 über einen Riemen 120 in Verbindung. Die Riemenscheibe 119 treibt eine Lüfterrad 121 des Lüfters 113 direkt an. Ein von dem Lüfterrad 121 erzeugter Luftstrom wirkt auf einen Kühler 122.

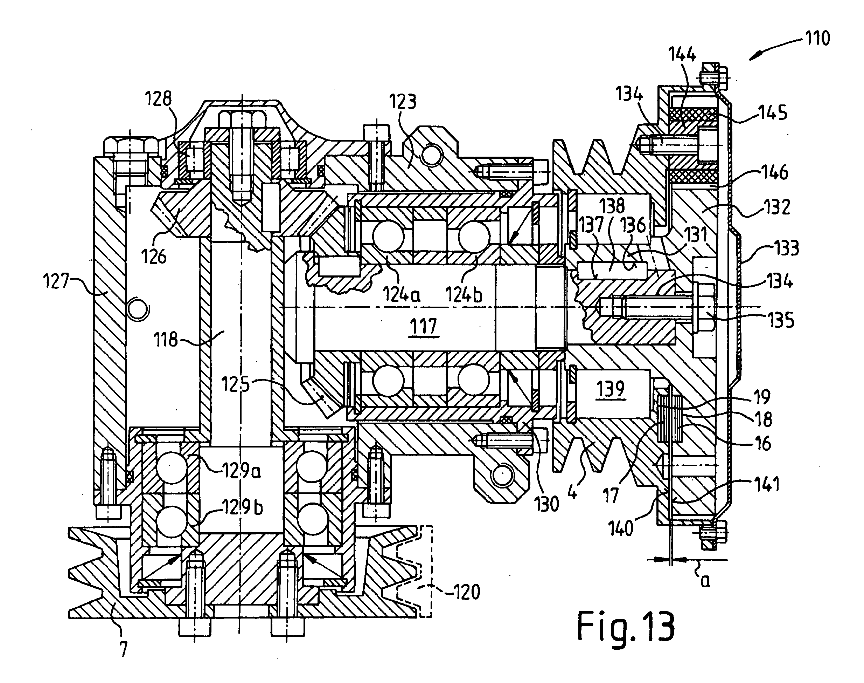

Figur 13 zeigt eine Schnittdarstellung eines weiteren Winkelgetriebes 110. Ein erstes im wesentlichen zylindrisches Gehäuseteil 123 ist an einem nicht gezeigtem Karosserieteil, einem Hilfsträger oder einem Motorblock befestigt. Dieses zylindrische Gehäuseteil 123 nimmt über ein Rollenlagerpaar 124a, 124b eine Welle 117 auf, die an einem ihrer Enden ein Kegelzahnrad 125 trägt. Das Kegelzahnrad 125 steht in Wirkverbindung mit einem zweiten Kegelrad 126. Das Kegelzahnrad 126 sitzt auf einem Ende einer Welle 118. Die Welle 118 ist in einem zweiten Gehäuseteil 127 beidseitig mittels Lagern 128, 129a, 129b gelagert. An dem dem Kegelzahnrad 126 gegenüberliegenden Ende der Welle 118 ist eine Riemenscheibe 7 befestigt. Diese trägt einen Riemen 120, durch den das nicht dargestellte Hilfsaggregat, insbesondere ein Lüfter, angetrieben ist. Das Gehäuseteil 123 ist auf der dem Kegelzahnrad 125 gegenüberliegenden Seite mit einem Deckel 130 geschlossen. Diesen Deckel 130 durchdringt das freie Ende der Welle 117 zentrisch und ragt aus diesem heraus. Auf dem herausragendem Wellenende 117 ist ein Flansch 132 montiert, welcher eine Nabe 131 aufweist und mit einem Deckel 133 verschlossen ist. Der Flansch 132 ist über eine Schraube 135 gesichert, welche in eine im Achszentrum der Welle 117 eingebrachte Gewindebohrung 134 greift. Die Nabe 131 des Flansches 132 weist an ihrem Innendurchmesser eine sich in Achsrichtung erstreckende Nut 136 auf. Ebenso besitzt die Welle 117 an ihrem Außendurchmesser eine dazu korrespondierende Nut 137. Zwischen beiden Nuten 136, 137 ist ein Keil 138 eingesetzt, der eine feste Drehverbindung des Flansches 132 mit der Welle 117 und damit mit den Kegelzahnrädern 125, 126 und weiter mit der Riemenscheibe 7 bewirkt. Auf dem Aussendruchmesser der Nabe 131 sitzt ein Lagerpaar 139, auf welchem eine Riemenscheibe 4 gelagert ist. Diese treibt einen nicht dargestellten Riemen, welcher mit einer auf einem Kurbelwellenende eine Verbrennungsmotors angebrachten Riemenscheibe in Wirkverbindung steht (nicht dargestellt). Die Riemenscheibe 4 ist wenigstens auf ihrer einer inneren Flanschfläche 140 des Flansches 132 zugewandten Seite als plane Flanschfläche 141 ausgebildet. Beide Flanschflächen 140, 141 tragen auf Kreisbahnen gleichen Durchmessers gleichgroße Dauermagnete 16, 17 in gleicher Anzahl und bei gleicher Teilung der Kreisbahnen. Die Dauermagnete 16, 17, welche zu den Flanschflächen 140, 141 hin vorzugsweise einen runden Querschnitt aufweisen, sind in Ausnehmungen 18, 19 der sich gegenüber liegenden Flanschflächen 140 des Flansches 132 und 141 der Riemenscheibe 4 eingesetzt und gegen axiales Verschieben gesichert. Zwischen den sich gegenüberliegenden Flächen der Dauermagnete 16, 17 ist ein Luftspalt a vorhanden, so dass der Flansch 132 und die Riemenscheibe 4 sich berührungsfrei, aber der Gesamtmagnetkraft entsprechend, gleichsinnig drehen und Drehmomente übertragen können. Die Dauermagnete 16, 17 sind auf den Flanschflächen 140 und 141 wechselweise als Nordpol-Südpol-Nordpol-Südpol angeordnet, wobei sich vorzugsweise jeweils Nordpole und Südpole gegenüber stehen. Zusätzlich sind in die Flanschfläche 141 der Riemenscheibe 4 auf einer weiteren vor der Kreisbahn für die Dauermagnete 17 abweichenden Kreisbahn Stehbolzen 143 eingesetzt welche metallene Ringe 144 tragen. Diese Ringe 144 oder die Stehbolzen 143 können mit einem elastischem Ring 145 versehen sein. Die Flanschfläche 140 des Flansches 132 weist auf einer entsprechenden Kreisbahn kreisbogenförmige Nuten 146 auf. Die kreisbogenförmigen Nuten 146 haben eine Bogenlänge, welche ca. dem doppelten des Durchmessers eines der Stehbolzen 143 oder ca. dem doppelten des Außendurchmessers eines metallenen Rings 144 oder ca. dem doppelten des Außendurchmessers eines elastischen Rings 145 entspricht. Die Stehbolzen 143 greifen in die kreisbogenförmigen Nuten 146 ein. Sie befinden sich jedoch, solange die Gesamtmagnetkraft der Dauermagnete für die Übertragung des Drehmoments ausreicht, in einer Mittellage in den kreisbogenförmigen Nuten 146. Dort pendeln sie um diese entsprechend der Drehschwingungsdämpfung durch die Dauermagnete 16, 17 funktionslos mit.

Die Funktion des in Figur 13 beschriebenen Winkelgetriebes 110 mit Drehschwingungsdämpfer lässt sich wie folgt beschreiben: Ein mit einer Riemenscheibe versehenes Kurbelwellenende eines Verbrennungsmotors treibt über einen Riemen die Riemenscheibe 4 des Winkelgetriebes 110 an. Die Gesamtmagnetkraft der Dauermagnete 17 in der Flanschfläche 141 der Riemenscheibe 4 und der Dauermagnete 16 in der Flanschfläche 140 des Flansches 132 übertragen berührungslos ein Drehmoment, welches etwa zwischen 50 % und 85 % des maximal auftretenden Drehmoments liegt auf die Welle 117. Dieses Drehmoment wird weiter über die Kegelzahnräder 125, 126 und die Welle 118 auf die Riemenscheibe 7 übertragen. Bis zum Erreichen des Maximums dieses Teillastdrehmoments bleiben die Stehbolzen 143 mit ihren Zusatzringen 144, 145 funktionslos. Beim Überschreiten des Teillastdrehmoments, für welches die aus der Gesamtzahl der Dauermagnete resultierende Gesamtmagnetkraft bemessen ist, legen sich die Stehbolzen 143 bzw. deren Ringe 144, 145 an die Ringbogenenden der Nuten 146 an. Die Stehbolzen 143 übernehmen nun die Übertragung des insbesondere kurzzeitig auftretenden, die Gesamtmagnetkraft übersteigenden Drehmoments.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung vor sämtliche Arten von Magneten, insbesondere Elektromagnete, in der Vorrichtung zum Einsatz zu bringen. Ein einer erfindungsgemäßen Vorrichtung nachgeschaltetes Getriebe oder ein einer erfindungsgemäßen Vorrichtung nachgeschalteter Propeller ist Im Sinne der Erfindung als Hilfsaggregat zu verstehen.

### Bezugszeichenliste:

- 1: Vorrichtung
- 2: Hilfsaggregat
- 3, 3', 3'': Riemen
- 4: antreibende Riemenscheibe
- 5: Walzenlager/Kugellager
- 6: Walzenlager/Kugellager
- 7: Gegenscheibe/abtreibende Riemenscheibe
- 7': Riemenscheibe
- 8: Flansch
- 9: Antriebswelle von 2
- 10: Spannkonus
- 11: Spannschraube
- 12: Flanschfläche von 7
- 13: Flanschfläche von 4
- 14: Drehachse von 1
- 15: Kreisbahn auf 12, 13
- 15': Kreisbahn auf 12, 13
- 16: Dauermagnet auf 7
- 17: Dauermagnet auf 4
- 18: Vertiefung in 7
- 19: Vertiefung in 4
- 20: Südpol von 16
- 21: Nordpol von 17, 25
- 22: Mitnahmeverbindung
- 23: Nut
- 24: Gewindeloch
- 25: Gummiring
- 26: Bolzen
- 27: Endfläche von 23
- 28: Endfläche von 23
- 29: Seite
- 30: Deckel
- 40: Träger
- 41: erstes Ende von 40
- 42: Nabe
- 43: zweites Ende von 40
- 44: Bohrung in 4
- 45: Lager in 44
- 46: Spannschraube
- 47: Kontermutter

- 48: Luftspalt
- 60: Riemen
- 61: Achsstummel
- 62: Flansch für 61
- 70: Motorausgangswelle
- 71: Eingangswelle
- 72: Teilscheibe von 7
- 73: Teilscheibe von 7
- 74: Randbereich
- 75: Schraube
- 76: Flanschfläche von 7
- 77: Flanschfläche von 4
- 78: Südpol von 17
- 79: Luftspalt
- 80: Dämpfungseinheit
- 81: Dämpfungseinheit
- 82: Nordpol von 16, 101
- 90: Durchbruch in 4
- 91: Kreisring
- 92: Radiale
- 93: Seitenfläche von 90
- 94: Seitenfläche von 90
- 95: Dauermagnet
- 96: Wirkfläche von 17
- 97: Wirkfläche von 17
- 98: Nase an 4
- 99: Seitenfläche von 98
- 100: Seitenfläche von 98
- 101: Dauermagnet
- 102: Wirkfläche von 16
- 103: Wirkfläche von 101
- 104: Torus
- 105: Anschlag
- 106: Spielraum
- 107: Spielraum
- 108: Dämpfungszelle
- 110: Winkelgetriebe
- 111: Fahrzeug
- 112: Verbrennungsmotor
- 113: Lüfter
- 114: Vorderrad von 111
- 115: Vorderrad von 111
- 116: Riemenscheibe
- 117: Welle von 110
- 118: Welle von 110
- 119: Riemenscheibe
- 120: Riemen
- 121: Lüfterrad
- 122: Kühler
- 123: Gehäuseteil
- 124a, 124b: Rollenlagerpaar
- 125: erstes Kegelzahnrad
- 126: zweites Kegelzahnrad
- 127: Gehäuseteil
- 128: Lager
- 129a, 129b: Lager
- 130: Deckel
- 131: Nabe
- 132: Flansch
- 133: Deckel
- 134: Gewindebohrung
- 135: Schraube
- 136: Nut in 131
- 137: Nut in 117
- 138: Keil
- 139: Lagerpaar
- 140: innere Flanschfläche
- 141: plane Flanschfläche
- 142: Flansch
- 143: Stehbolzen
- 144: Ring
- 145: elastischer Ring
- 146: kreisbogenförmige Nut

## Patentansprüche

1. Vorrichtung (1) zur Übertragung von Drehmomenten und zur Dämpfung von Drehschwingungen, insbesondere in Kraftfahrzeugen und vergleichbaren Verkehrsmitteln mit Verbrennungsmotor, umfassend ein durch den Verbrennungsmotor antreibbares Bauteil (4) und ein zum Antrieb nachgeordneter Aggregate vorgeschenes Bauteil (7), wobei gegenüberliegende Flanschflächen (12, 13) der Bauteile (4, 7) gemeinsam mit den Bauteilen (4, 7) gegeneinander verschiebbare Magnete (16, 17, 95, 101) aufweisen, durch welche zwischen den Bauteilen (4, 7) Drehmomente übertragbar und Drehschwingungen dämpfbar sind, wobei eine Verdrehbarkeit der beiden Bauteile (4, 7) durch eine mechanische Mitnahme-Verbindung (22) begrenzt ist, **dadurch gekennzeichnet, dass** die Magnete (16, 17) an den sich gegenüberliegenden Flanschflächen (12, 13) auf mit gleichem Radius konzentrisch zu einer Drehachse (14) der Vorrichtung (1) verlaufenden Kreisbahnen (15, 91, 104) paarweise gegenüberliegend angeordnet sind, mit Polen (20, 21) zu der Flanschfläche (12, 13) weisen und durch einen quer zu der Drehachse (14) stehenden Spalt (48, 79, 106, 107) voneinander getrennt sind und dass mehrere mechanische Mitnahme-Verbindungen (22) auf einer weiteren ebenfalls konzentrisch zu der Drehachse (14) verlaufenden Kreisbahn (15', 91, 104) angeordnet sind.

2. Vorrichtung nach Anspruch 1, **dadurch gekennzeichnet, dass** durch die mechanischen Mitnahme-Verbindungen (22) Drehschwingungen bei Vollast- und Spitzendrehmomenten ebenfalls dämpfbar sind.

3. Vorrichtung nach einem der vorhergehenden Ansprüche, **dadurch gekennzeichnet, dass** die Bauteile (4, 7) insbesondere parallel zueinander ausgerichtete, scheibenförmige Flanschflächen (12, 13; 140, 141) aufweisen.

4. Vorrichtung nach einem der vorhergehenden Ansprüche,
**dadurch gekennzeichnet, dass** sich die gegenüberliegenden bzw. zusammenwirkenden Magnete (16, 17, 95, 101) kontaktfrei bzw. reibungsfrei (a) gegenüberliegen, wobei sich zwischen diesen insbesondere ein Luftspalt (48, 79) befindet.

5. Vorrichtung nach einem der vorhergehenden Ansprüche,
**dadurch gekennzeichnet, dass** mittels der Einzelmagnete (16, 17, 95, 101) Leerlauf- und/oder Teillastdrehmomente übertragbar sind.

6. Vorrichtung nach einem der vorhergehenden Ansprüche,
**dadurch gekennzeichnet, dass** die Übertragung von Volllastdrehmomenten bzw. Spitzendrehmomenten durch mechanische Anschläge (22) erfolgt.

7. Vorrichtung nach einem der vorhergehenden Ansprüche,
**dadurch gekennzeichnet, dass** die Verdrehbarkeit der beiden Bauteile gegeneinander durch mechanische Anschläge (22) begrenzt ist, die als in Ausnehmungen (23, 146) eingreifende Mitnehmer (26, 143) ausgebildet sind.

8. Vorrichtung nach einem der vorhergehenden Ansprüche, **dadurch gekennzeichnet, dass** die Magnete (16, 17, 95, 101) in senkrecht zu einer Drehachse (14) der Vorrichtung (1) stehenden Ebenen (E, F) angeordnet sind.

9. Vorrichtung nach einem der vorhergehenden Ansprüche, **dadurch gekennzeichnet, dass** die Magnete (16, 17, 95, 101) in Ebenen (G, H, I, J) angeordnet sind, in welchen die Drehachse (14) der Vorrichtung (1) liegt.

10. Vorrichtung nach einem der vorhergehenden Ansprüche, **dadurch gekennzeichnet, dass** sich die Magnetpaare (16, 17; 95, 101) bei unbelasteter Vorrichtung (1) in einer neutralen Mittelstellung (M) vollflächig gegenüberstehen und sich gegenseitig anziehen.

11. Vorrichtung nach einem der Ansprüche 1 bis 9, **dadurch gekennzeichnet, dass** die Magnete (17, 95) der Scheibe (4) den Magneten (16, 101) der Scheibe (7) gleichpolig gegenüber stehen und die Scheibe (7) durch abstoßende Wirkung in die Mittelstellung (M) drücken.

12. Vorrichtung nach einem der vorhergehenden Ansprüche, **dadurch gekennzeichnet, dass** ein Spiel (b, b') der Mitnahmeverbindung (22), welche die Verdrehbarkeit der beiden Bauteile (4, 7) begrenzt, so bemessen ist, dass das Magnetpaar (16, 17; 95, 101) bzw. die Dämpfungseinheit (81, 82) bzw. die Dämpfungszelle (108) in einer maximalen Auslenkstellung (A, A') eine Rückstellkraft, insbesondere eine maximale Rückstellkraft, in Richtung der Mittelstellung (M) bewirkt,

13. Anordnung einer Vorrichtung nach einem der vorhergehenden Ansprüche, **dadurch gekennzeichnet, dass** wenigstens eine Vorrichtung (1) Bestandteil eines Winkelgetriebes (110) ist oder diesem vorgeschaltet oder nachgeschaltet ist.

14. Anordnung nach Anspruch 13, **dadurch gekennzeichnet, dass** das Winkelgetriebe (110) zwischen einem Verbrennungsmotor (112) und einem Zusatzaggregat, insbesondere einem Lüfter (121) angeordnet ist.

15. Vorrichtung insbesondere nach Anspruch 1, **dadurch gekennzeichnet, dass** zwischen den Bauteilen (4, 7) gegenüberliegende, mit den Bauteilen (4, 7) gegeneinander verschiebbare Magnete (16, 17, 95, 101) vorgesehen sind, welche ein auf das antreibende Bauteil (4 bzw- 7) wirkendes Drehmoment vollständig auf das angetriebene Bauteil (7 bzw. 4) übertragen.

16. Vorrichtung nach einem der vorhergehenden Ansprüche 1 bis 14, **dadurch gekennzeichnet, dass** die Scheibe (4) zwei gegenüberliegende Flanschflächen (13, 77) aufweist, auf welchen Dauermagnete (17) angeordnet sind, welchen Dauermagnete (16) gegenüberliegen, die auf Flanschflächen (12, 76) von Teilscheiben (72, 73) der Scheibe (7) angeordnet sind.

17. Vorrichtung nach Anspruch 16, **dadurch gekennzeichnet, dass** die Teilscheibe (73) von der Teilscheibe (72) getragen wird, welche an eine Eingangswelle (71) anflanschbar ist.

## Claims

1. Device (1) for transmitting torques and for damping torsional vibrations, in particular in motor vehicles and comparable means of transportation with an internal combustion engine, comprising a component (4) that can be driven by the internal combustion engine and a component (7) provided for driving attached units, whereby opposite flange surfaces (12, 13) of the components (4, 7) together with the components (4, 7) comprise mutually displaceable magnets (16, 17, 95, 101), by means of which torques can be transmitted between the components (4, 7) and torsional vibrations can be damped, whereby the torsional capacity of the two components (4, 7) is restricted by a mechanical locking connection (22), **characterised in that** the magnets (16, 17) are arranged opposite one another in pairs on opposite flange surfaces (12, 13) on circuits (15, 91, 104) running with the same radius concentric to a rotary axis (14) of the device (1), with poles (20, 21) pointing to the flange surface (12, 13), and are separated from one another by a gap (48, 79, 106, 107) perpendicular to the rotary axis (14), and **in that** several mechanical locking connections (22) are arranged on a further circuit (15', 91, 104) also running concentric to the rotary axis (14).

2. Device according to claim 1, **characterised in that** by means of the mechanical locking connections (22) rotary vibrations can be also be damped in the case of full load and peak torques.

3. Device according to one of the preceding claims, **characterised in that** the components (4, 7) have disc-shaped flange surfaces (12, 13; 140, 141) which are, in particular, orientated parallel to each other.

4. Device according to one of the preceding claims, **characterised in that** the magnets (16, 17, 95, 101) lying opposite each other and interacting with each other lie opposite each other in a contact-free and friction-free manner (a), whereby there is in particular an air gap (48, 79) between them.

5. Device according to one of the preceding claims, **characterised in that** idling and/or partial-load torques can be transmitted by means of the individual magnets (16, 17, 95, 101).

6. Device according to one of the preceding claims, **characterised in that** full-load torques and peak torques are transmitted by mechanical stops (22).

7. Device according to one of the preceding claims, **characterised in that** the torsional capacity of the two components with respect to each other is limited by mechanical stops (22) which are designed, in particular, as drivers (26, 143) which engage in recesses (23, 146).

8. Device according to one of the preceding claims, **characterised in that** the magnets (16, 17, 95, 101) are arranged in planes (E, F) which are perpendicular to an axis of rotation (14) of the device (1).

9. Device according to one of the preceding claims, **characterised in that** the magnets (16, 17, 95, 101) are arranged in planes (G, H, I, J) in which the axis of rotation (14) of the device (1) is situated.

10. Device according to one of the preceding claims, **characterised in that**, if the device (1) is not subjected to a load, the magnet pairs (16, 17; 95, 101) face each other fully in a neutral central position (M) and attract each other.

11. Device according to one of claims 1 to 9, **characterised in that** the magnets (17, 95) of the disc (4) are opposite the magnets (16, 101) of the disc (7) with the same poles facing each other and push the disc (7) by means of a repelling action into the central position (M).

12. Device according to one of the preceding claims, **characterised in that** a play (b, b') of the locking connection (22), which restricts the torsional capacity of the two components (4, 7), is dimensioned in such a manner that the magnet pair (16, 17; 95, 101) or the damping unit (81, 82) or the damping cell (108) brings about, in a maximum deflection position (A, A'), a restoring force, in particular a maximum restoring force, in the direction of the central position (M).

13. Arrangement of a device according to one of the preceding claims, **characterised in that** at least one device (1) is part of an angular gear mechanism (110) or is connected upstream or downstream of the latter.

14. Arrangement according to claim 13, **characterised in that** the angular gear mechanism (110) is arranged between an internal combustion engine (112) and an additional assembly, in particular a fan (121).

15. Device, in particular according to claim 1, **characterised in that** opposite magnets (16, 17, 95, 101), displaceable against one another with the components (4, 7) are provided between the components (4, 7), which magnets transmit a torque acting on the driving component (4 or 7) entirely onto the driven component (7 or 4).

16. Device according to one of the preceding claims 1 to 14, **characterised in that** the disc (4) has two opposite flange faces (13, 77) on which permanent magnets (17) are arranged with permanent magnets (16) lying opposite them, which are arranged on flanged surfaces (12, 76) of part discs (72, 73) of the disc (7).

17. Device according to claim 16, **characterised in that** the part disc (73) is supported by the part disc (72) which can be flanged onto an input shaft (71).

## Revendications

1. Dispositif (1) pour la transmission de couples de rotation et pour l'amortissement d'oscillations de rotation, en particulier dans des véhicules et des moyens de transport similaires avec moteur à combustion, comprenant une pièce (4) entraînable par le moteur à combustion et une pièce (7) prévue pour entraîner des groupes positionnés en aval, des surfaces de brides (12, 13) des pièces (4, 7), opposées l'une à l'autre, présentant conjointement avec les pièces (4, 7) des aimants mobiles l'un en regard de l'autre (16, 17, 95, 101), par l'intermédiaire desquels des couples de rotation peuvent être transmis et des oscillations de rotation peuvent être amorties entre les pièces (4, 7), une capacité de rotation des deux pièces (4, 7) étant limitée par une liaison d'entraînement mécanique (22),
**caractérisé en ce que** les aimants (16, 17) sur les surfaces de brides opposées l'une à l'autre (12, 13) sont agencés par paires de manière opposée l'un à l'autre sur des trajectoires circulaires (15, 91, 104) concentriques par rapport à un axe de rotation (14) du dispositif (1) avec le même rayon, présentent des pôles (20, 21) vers les surfaces de bride (12, 13) et sont séparés l'un de l'autre par un entrefer (48, 79, 106, 107) transversal à l'axe de rotation (14), et **en ce que** plusieurs liaisons d'entraînement mécaniques (22) sont agencées sur une autre trajectoire circulaire (15', 91, 104) également concentrique par rapport à l'axe rotatif (14).

2. Dispositif selon la revendication 1,
**caractérisé en ce que**, grâce aux liaisons d'entraînement mécaniques (22), des oscillations de rotation peuvent également être amorties pour des couples de rotation à pleine charge et de pointe.

3. Dispositif selon l'une des revendications précédentes,
**caractérisé en ce que** les pièces (4, 7) présentent des surfaces de bride (12, 13 ; 140, 141) particulièrement dirigées de manière parallèle les unes vers les autres et formant disque.

4. Dispositif selon l'une des revendications précédentes,
**caractérisé en ce que** les aimants (16, 17, 95, 101), opposés l'un à l'autre et interagissant, se font face sans contact ou sans frottement (a), notamment du fait qu'un entrefer (48, 79) se trouve entre eux.

5. Dispositif selon l'une des revendications précédentes,
**caractérisé en ce qu'**au moyen des aimants individuels (16, 17, 95, 101), des couples de rotation à vide et/ou en charge partielle peuvent être transmis.

6. Dispositif selon l'une des revendications précédentes,
**caractérisé en ce que** la transmission de couples de rotation à pleine charge ou de pointe s'effectue par des butées mécaniques (22).

7. Dispositif selon l'une des revendications précédentes,
**caractérisé en ce que** la capacité de rotation des deux pièces l'une par rapport à l'autre est limitée par des butées mécaniques (22), qui sont formées comme des entraînements (26, 143) en prise dans des évidements (23, 146).

8. Dispositif selon l'une des revendications précédentes,
**caractérisé en ce que** les aimants (16, 17, 95, 101) sont agencés dans un plan (E, F) orthogonal à l'axe de rotation (14) du dispositif (1).

9. Dispositif selon l'une des revendications précédentes,
**caractérisé en ce que** les aimants (16, 17, 95, 101) sont agencés dans des plans (G, H, I, J), dans lesquels se trouve l'axe de rotation (14) du dispositif (1).

10. Dispositif selon l'une des revendications précédentes,
**caractérisé en ce que** les paires d'aimants (16, 17 ; 95, 101) se font face dans une position centrale neutre (M) avec un dispositif (1) non chargé et s'attirent mutuellement.

11. Dispositif selon l'une des revendications 1 à 9,
**caractérisé en ce que** les aimants (17, 95) du disque (4) s'opposent avec le même pole aux aimants (16, 101) du disque (7) et le disque (7) est poussé par action de repoussement dans la position centrale (M).

12. Dispositif selon l'une des revendications précédentes,
**caractérisé en ce qu'**un jeu (b, b') de la liaison d'entraînement (22), laquelle limite la capacité de rotation des deux pièces (4, 7), est calculé de telle manière que la paire d'aimants (16, 17 ; 95, 101) ou l'unité d'amortissement (81, 82) ou la cellule d'amortissement (108), dans une position de déploiement maximale (A, A'), exerce une force de rappel, particulièrement une force de rappel maximale, en direction de la position centrale (M).

13. Agencement d'un dispositif selon l'une des revendications précédentes,
**caractérisé en ce qu'**au moins un dispositif (1) est une partie d'un engrenage conique (110) ou est branché en amont ou en aval de celui-ci.

14. Agencement selon la revendication 13,
**caractérisé en ce que** l'engrenage conique (110) est agencé entre un moteur à combustion (112) et un groupe supplémentaire, notamment un ventilateur (121).

15. Dispositif particulièrement selon la revendication 1,
**caractérisé en ce qu'**entre les pièces (4, 7), sont prévus des aimants (16, 17, 95, 101) mobiles les uns par rapport aux autres avec les pièces (4, 7) et opposés les uns aux autres, lesdits aimants transmettant complètement, à la pièce entraînée (7 ou 4), un couple de rotation agissant sur la pièce entraînante (4 ou 7).

16. Dispositif selon l'une des revendications précédentes 1 à 14,
**caractérisé en ce que** le disque (4) présente deux surfaces de brides (13, 77) opposées l'une à l'autre, sur lesquelles des aimants permanents (17) sont agencés, auxquels des aimants permanents (16) sont opposés, qui sont agencés sur des surfaces de bride (12, 76) de disques partiels (72, 73) du disque (7).

17. Dispositif selon la revendication 16,
**caractérisé en ce que** le disque partiel (73) est porté par le disque partiel (72), lequel peut être accouplé à un arbre d'entrée (71).
